# EUROPÄISCHE PATENTSCHRIFT

(11) **EP 3 143 913 B1**
(45) Veröffentlichungstag und Bekanntmachung des Hinweises auf die Patenterteilung: **05.06.2019**
(21) Anmeldenummer: 16001608.5
(22) Anmeldetag: 21.07.2016
(51) Int. Cl.: A47J 36/28, A47J 31/00

(54) **EINWEGVORRICHTUNG ZUR GENUSSFERTIGEN ZUBEREITUNG HEISSER AUFGUSSGETRÄNKE ODER BRÜHGETRÄNKE**
DISPOSABLE DEVICE FOR PREPARING HOT BREWED BEVERAGES OR BEVERAGES OBTAINED BY INFUSION READY FOR CONSUMPTION
DISPOSITIF JETABLE POUR LA PRÉPARATION DE BOISSONS INFUSÉES ET DE BOISSONS CHAUDES PRÊTES À CONSOMMER

(30) Priorität: 22.07.2015 DE 102015009462
(43) Veröffentlichungstag der Anmeldung: 22.03.2017
(73) Patentinhaber: Engasser, Julius, 81245 München (DE); Harpeng, Johannes, 45259 Essen (DE); Bora, Moritz, 80634 München (DE); Mayer, Kuno, 60325 Frankfurt am Main (DE); Hanewald, Martin, 81669 München (DE)
(72) Erfinder: Engasser, Julius, 81245 München (DE); Harpeng, Johannes, 45259 Essen (DE); Bora, Moritz, 80634 München (DE); Mayer, Kuno, 60325 Frankfurt am Main (DE); Hanewald, Martin, 81669 München (DE)

(56) Entgegenhaltungen:
- EP-A1- 1 910 189
- EP-A2- 2 042 061
- DE-A1- 2 255 405
- DE-T2- 60 028 797
- DE-U1-202014 004 951
- US-A1- 2010 263 545

## Beschreibung

### Technisches Gebiet

Die Erfindung betrifft eine Vorrichtung zur genussfertigen Bereitstellung eines heißen Aufgussgetränks oder Brühgetränks, welche alle zur genussfertigen Bereitstellung des heißen Getränks erforderlichen Komponenten enthält, und ein Verfahren, das sich einer solchen Vorrichtung bedient.

### Stand der Technik

Druckschrift EP 2 042 061 A2 beschreibt eine autarke Heißzubereitungsvorrichtung für Fertiglebensmittel. Eine Zubereitungsflüssigkeit wird darin in einem Durchlauferhitzer erwärmt und anschließend in ein Lebensmittelreservoir geführt. Die zur Erwärmung der Zubereitungsflüssigkeit notwendige Energie wird in einer exothermen Reaktion freigesetzt.

Druckschrift DE 202013001308 U1 offenbart einen Einweggetränkeautomaten für Heißgetränke, der bereits alle zur genussfertigen Zubereitung des Heißgetränks erforderlichen Komponenten enthält, sowohl die dazu erforderlichen technischen Bestandteile, als auch die zur Zubereitung notwendigen Nahrungsmittelgrundstoffe.

Druckschriften EP 2125567 B1 und FR 2593694 A1 beschreiben ebenfalls selbsterhitzende Getränkebehälter.

### Beschreibung der Erfindung

### Mit der Erfindung gelöste Aufgaben

Der Erfindung liegt die Aufgabe zu Grunde, eine Vorrichtung bzw. ein Verfahren bereitzustellen mit dem ein im Vergleich zum Stand der Technik leistungsfähigerer Erhitzungsprozess realisiert wird..

### Lösung der Aufgabe

Die zuvor genannte Aufgabe wird gelöst durch den Gegenstand des Anspruchs 1. Vorteilhafte Ausprägungen der Erfindung sind in den Unteransprüchen genannt.

Die erfindungsgemäße Vorrichtung umfasst in allen ihren Ausführungsformen vorzugsweise ein Behältnis, vorzugsweise aus Metall (im Weiteren "Dose" genannt), welches über ein Heizelement und vorzugsweise mindestens zwei Kammern verfügt, die vor der Verwendung der Vorrichtung räumlich voneinander getrennt sind. Ebenso besitzen alle Ausführungsformen der Erfindung vorzugsweise ein Filtersystem, das die Aufgussflüssigkeit oder Brühflüssigkeit nach der Extraktion der Geschmacksstoffe oder Aromastoffe aus einer Aufgussmasse oder Brühmasse von dieser trennt.

Die erfindungsgemäße Vorrichtung hat beispielsweise die Form einer Dose, wobei als Material für die Dosenmantelfläche vorzugsweise ein Metall dient.

Ausführungsformen der Erfindung nutzen als Dosenmaterial ein Leichtmetall, vorzugsweise Aluminium. Aluminium besitzt den Vorteil eines geringen spezifischen Gewichts und einer guten Verformbarkeit. Außerdem wird dieser Stoff bereits heute standardmäßig als Rohmaterial bei der Herstellung vieler verschiedener Dosentypen eingesetzt. Seine technischen Eigenschaften sind daher umfassend erforscht und die Arbeitsschritte bei seiner Verarbeitung entsprechend optimiert.

Weitere Ausführungsformen nutzen als Dosenmaterial andere Metalle oder Legierungen, vorzugsweise jedoch Stahllegierungen. Diese haben gegenüber Aluminium die Vorteile, preisgünstiger zu sein und einen höheren Schmelzpunkt zu besitzen.

Die Dosenwand an der Mantelfläche der Dose kann wahlweise einlagig oder mehrlagig ausgeführt sein, wobei sich im mehrlagigen Fall zwischen einzelnen Metalllagen eine isolierende Luftschicht oder eine Vakuumkammer befinden kann. Die erste, einlagige Ausführungsform besitzt den Vorteil einer besonders einfachen technischen Herstellbarkeit. Die weiteren Ausführungsformen können den Nutzer der Erfindung bei der Verwendung derselben beim Festhalten der Dose während des Aufgussprozesses oder Brühprozesses vor Verbrennungen schützen.

Bei den Ausführungsformen, bei denen die Dosenwand an der Mantelfläche der Dose nur eine einzige Lage (vorzugsweise eine einzige Metalllage) umfasst, kann die Mantelfläche der Dose außen mit einer Schicht aus einem Wärme isolierenden Material versehen sein. Eine solche Schicht kann auch bei Dosen eingesetzt werden, bei denen die Mantelfläche mehrere Lagen (z. B. mehrere Metalllagen) umfasst. Dabei kann es sich wahlweise um Pappe oder einen Kunststoff, z. B. Styropor, handeln, wobei die isolierende Lage vorzugsweise leicht zu entfernen ist, um ein einfaches Recycling der Rohstoffe nach der Verwendung zu gewährleisten. Dem Fachmann leuchtet hier ein, dass als Alternativen zu Pappe und dem genannten Kunststoff jedes beliebige wärmeisolierende Material eingesetzt werden kann, das den genannten Zweck erfüllt.

Der Raum, der von der Mantelfläche der Dose eingeschlossen wird, bietet Platz für eine oder mehrere Kammern, in denen sich verschiedene Flüssigkeiten befinden. In der technisch einfachsten denkbaren Ausführungsform der vorliegenden Erfindung bildet das Dosenblech selbst eine einzige Kammer, die nach oben durch den Dosendeckel und nach unten durch den Dosenboden abgeschlossen wird. Diese Kammer dient dann vorzugsweise als Aufbewahrungsort für die Aufgussflüssigkeit oder Brühflüssigkeit sowie für ein sauerstoffhaltiges Gasgemisch. In das Innere dieser Kammer können andere wichtige Komponenten der Erfindung ragen, etwa das Heizelement und gegebenenfalls zusätzlich Körper, welche die Aufgussmasse oder Brühmasse enthalten.

In Ausführungsformen der Erfindung steht der Raum, der von der Mantelfläche der Dose eingeschlossen wird, vor der Verwendung vorzugsweise bereits unter einem Druck von 2-30 bar, und besonders bevorzugt unter einem Druck von 5 bis 15 bar, mit welchem er bereits bei der Herstellung beaufschlagt wurde. Der Druck liegt somit vorzugsweise bereits vor Aktivierung des Heizelements in der Dose vor.

Alternativ oder zusätzlich kann sich im Volumen, das von der Dosenmantelfläche umgeben wird, eine eigenständige Kammer befinden. Eigenständig bedeutet in diesem Zusammenhang, dass die Kammer zumindest Abschnittsweise über eine Außenwand verfügt, welche nicht der Dosenwand entspricht. Auch die gesamte Außenwand der Kammer kann durch eine zusätzlich zur Dosenwand vorgesehene Wand gebildet sein. Die Außenwand einer solchen Kammer ist bei besonders bevorzugten Ausführungsformen der Erfindung flexibel gestaltet, das heißt, sie ist verformbar. Auf diese Weise kann das Volumen der Kammer variiert werden. So kann beispielsweise das Volumen der Kammer komprimiert werden, wenn von außen ein Druck auf die Kammerwand wirkt. Insbesondere kann das Volumen der Kammer, in der sich die Aufguss- oder Brühflüssigkeit befindet, während des Aufguss- oder Brühprozesses komprimiert werden.

Das Material, aus dem die flexible Kammerwand gestaltet ist, ist in bevorzugten Ausführungsformen eine Metall- oder Kunststofffolie oder ein dünn gewalztes Metallblech. Besonders bevorzugte Ausführungsformen der Erfindung nutzen als Kammerwandmaterial Aluminiumblech oder Stahlblech.

Zwischen der Dosenwand und der Kammerwand kann sich zumindest Abschnittsweise oder die Kammerwand vollständig umgebend ein eigenständiger Raum befinden. Dieser Raum dient als Aufbewahrungsort für ein sauerstoffhaltiges Gasgemisch und kann in besonderen Ausführungsformen dazu genutzt werden, im Heizelement entstehende Gase aufzunehmen, welche die Kammer dann vorzugsweise von mehreren Seiten umströmen und das darin enthaltene Volumen aufheizen. Gleichzeitig können diese Gase zu einem Druckanstieg im Zwischenraum zwischen Dosenwand und Kammer führen, welcher an das Volumen in der Kammer weitergegeben wird. Die Kammer selbst enthält in diesen Ausführungsformen der Erfindung die Aufgussflüssigkeit oder Brühflüssigkeit. In den Mittelpunkt der Kammer hinein ragt vorzugsweise das Heizelement selbst, das weitestgehend von der Kammer umschlossen wird, um so einen optimalen Übertrag der Wärme des Heizelements auf den Inhalt der Kammer zu gewährleisten.

Ausführungsformen der Erfindung besitzen im von der Mantelfläche der Dose umschlossenen Volumen nicht nur eine sondern zwei eigenständige Kammern zur Aufbewahrung von Flüssigkeiten. Eine innere der beiden Flüssigkeitskammern umschließt das Heizelement vorzugsweise vollständig und hält somit vorzugsweise direkten Kontakt zu diesem. Auf diese Weise kann der Inhalt der inneren Flüssigkeitskammer den zum Teil sehr hohen Temperaturen einer Wand des Heizelements ausgesetzt werden.

Die Kammerwand dieser inneren Flüssigkeitskammer ist vorzugsweise flexibel gestaltet. Die innere Flüssigkeitskammer wird vorzugsweise vollständig durch eine zweite äußere Flüssigkeitskammer eingeschlossen. Die Außenwand der äußeren Flüssigkeitskammer ist gleichzeitig die Wand der Dose und somit nicht flexibel. Der Inhalt der äußeren Flüssigkeitskammer hält durch die hier beschriebene Bauweise vorzugsweise nur direkten Kontakt zur Kammerwand der inneren Flüssigkeitskammer, nicht aber zum Heizelement selbst. Damit wird verhindert, dass er den hohen Temperaturen des Heizelements ausgesetzt wird. Die zum Aufheizen des Inhalts der äußeren Flüssigkeitskammer erforderliche Wärmeenergie wird vorzugsweise über die Kammerwand aus der inneren Flüssigkeitskammer durch Wärmeleitung bezogen.

Die innere und die äußere Flüssigkeitskammer können unterschiedliche Komponenten des zuzubereitenden Getränks beinhalten. Beispielsweise kann die innere Flüssigkeitskammer die wässrige Aufgussflüssigkeit oder Brühflüssigkeit sowie das für den Heizprozess nötige sauerstoffhaltige Gasgemisch enthalten. Die äußere Flüssigkeitskammer kann Milch beziehungsweise eine milchhaltige Flüssigkeit enthalten. Das Eiweiß der Milch würde bei direktem Kontakt mit dem heißen Heizelement denaturieren. Die Milch würde "anbrennen" und wäre für den Verzehr nicht mehr geeignet. Durch die oben beschriebene Bauweise wird dies jedoch verhindert, da die höchste Temperatur, der die Milch in der äußeren Flüssigkeitskammer ausgesetzt ist, die Temperatur der Aufgussflüssigkeit oder Brühflüssigkeit in der inneren Flüssigkeitskammer ist.

Sofern die Wand der inneren Kammer flexibel gestaltet ist, besitzt die innere Flüssigkeitskammer die Möglichkeit, innerhalb der äußeren Flüssigkeitskammer zu expandieren, wenn ihr Inhalt unter Druck gesetzt wird. Dadurch beansprucht sie mehr Volumen innerhalb der äußeren Flüssigkeitskammer und gibt den Druck, der auf ihr lastet, auch an das Volumen der äußeren Flüssigkeitskammer weiter. Dieser Druck kann dann genutzt werden, auch den Inhalt der äußeren Flüssigkeitskammer durch ein Ventil, eine Berstscheibe oder eine Trennscheibe mit Trennfolie aus der erfindungsgemäßen Vorrichtung zu zwingen, wenn ein bestimmter Schwellendruck in der äußeren Flüssigkeitskammer überschritten wird.

Weitere Ausführungsformen besitzen mehr als zwei wie oben beschriebene, ineinander gelagerte eigenständige Flüssigkeitskammern innerhalb des von der Mantelfläche der Dose eingeschlossenen Volumens zur Aufbewahrung von mehr als zwei Flüssigkeiten. Zwischen der innersten und der äußersten Flüssigkeitskammer besteht vorzugsweise ein Temperaturgradient. Der Überdruck in der Dose wird vorzugsweise nach den oben beschriebenen Mechanismen zwischen den Flüssigkeitskammern verteilt. Diese Ausführungsformen werden ebenfalls von der vorliegenden Erfindung erfasst. Sie können zudem alle Merkmale der zuvor beschriebenen Ausführungsformen und Varianten aufweisen.

Weitere Ausführungsformen besitzen mehrere wie oben beschriebene, jedoch radial nebeneinander liegende eigenständige Flüssigkeitskammern - vergleichbar mit der Form von Kuchenstücken - innerhalb des von der Mantelfläche der Dose eingeschlossenen Volumens zur Aufbewahrung von mehr als einer Flüssigkeit. Diese Anordnung kann so ausgebildet sein, dass zwischen den Flüssigkeitskammern beim Brühvorgang ein geringerer oder kein Temperaturgradient besteht. Der Überdruck in der Dose wird vorzugsweise nach den oben beschriebenen Mechanismen zwischen den Flüssigkeitskammern verteilt. Diese Ausführungsformen werden ebenfalls von der vorliegenden Erfindung erfasst. Sie können zudem alle Merkmale der zuvor beschriebenen Ausführungsformen und Varianten aufweisen.

Befestigt werden können die einzelnen Flüssigkeitskammern durch Halterungen, die vorzugsweise entweder am Deckel der Dose oder dem Dosenboden angebracht sind. Sie werden vorzugsweise auf diese Weise bei der Herstellung der erfindungsgemäßen Vorrichtung in den Dosenzylinder eingeführt.

Die Dose schließt nach oben hin vorzugsweise mit einem Deckel ab, der beim Herstellungsprozess auf die Dose gesetzt wird und üblicherweise aus demselben Material besteht, wie die Dosenmantelfläche. In speziellen Ausführungsformen der Erfindung kann das Material, aus dem der Deckel besteht, aber auch vom Material, aus dem die Dosenmantelfläche besteht, abweichen.

Je nach Ausführungsform der Erfindung verfügt der Deckel an seiner Außenseite über einen Druckmechanismus, einen Zugmechanismus und/oder einen Drehmechanismus. Unter Umständen kann er an seiner Außenseite auch nur über einen solchen Druckmechanismus, Zugmechanismus und/oder Drehmechanismus verfügen.

Zusätzlich zum Druckmechanismus, Zugmechanismus und/oder Drehmechanismus oder alternativ zu diesem kann der Deckel eine Ausgussöffnung aufweisen. Alternativ oder zusätzlich kann der Deckel auch über ein Überdruckventil verfügen. Unter Umständen kann der Deckel daher mit einem Druckmechanismus, Zugmechanismus und/oder Drehmechanismus sowie zusätzlich mit einer Ausgussöffnung und/oder einem Überdruckventil versehen sein.

Der Druckmechanismus, Zugmechanismus oder Drehmechanismus sitzt vorzugsweise im Mittelpunkt der Außenfläche des Deckels. In jenen Fällen, in denen es sich um einen Druckmechanismus handelt, befindet sich der Mechanismus vorzugsweise in einer leichten Mulde, wobei diese Mulde in bevorzugten Ausführungsformen der Erfindung mit einer leicht entfernbaren Kappe versehen ist, um den Mechanismus vor unbeabsichtigtem Betätigen zu schützen. Der Druckmechanismus, Zugmechanismus oder Drehmechanismus dient vorzugsweise dazu, eine Fluidverbindung zwischen der das sauerstoffhaltige Gasgemisch enthaltenden Kammer der Dose und dem Heizelement herzustellen und dadurch einen ersten Heizprozess im in der Dose enthaltenen Heizelement zu starten, der mindestens einen Teil der für den Aufgussvorgang oder Brühvorgang erforderliche Wärmeenergie liefert, und gegebenenfalls weitere Heizprozesse startet, und außerdem gegebenenfalls auch für eine Druckerhöhung erforderliche Gase freisetzt.

Die Ausgussöffnung ist mit einem Stopfen verschlossen und dient vorzugsweise der Freisetzung des fertigen Aufgussgetränks aus der Vorrichtung. Das Überdruckventil sorgt dafür, dass ein sich in der Dose bildender Überdruck während der Zubereitung abgebaut wird, noch bevor die Dose an der Ausgussöffnung geöffnet wird. Ein Überdruckventil ist daher vorzugsweise nur bei jenen Ausführungsformen der Erfindung vorhanden, bei welchen ein Aufbau eines Überdrucks in der Dose unerwünscht ist.

An der zum Doseninnenraum gerichteten Seite des Deckels befindet sich vorzugsweise im Mittelpunkt eine Halterung für das Heizelement. Die erfindungsgemäße Halterung dient dabei vorzugsweise dem Zweck, das Heizelement an einer bestimmten Stelle im Inneren der Dose zu fixieren. Dabei ist die Halterung so gestaltet, dass sie eine möglichst einfache Montage des Heizelements ermöglicht.

Bei manchen Ausführungsformen der Dose, die mit allen vorgenannten kombiniert werden können, sind an der zum Doseninnenraum gerichteten Seite des Deckels noch lamellenförmige Körper angebracht, welche die feste Aufgussmasse oder Brühmasse und ein Filtersystem enthalten. Diese lamellenförmigen Körper sind vorzugsweise in konzentrischen Kreisen um das Heizelement herum angeordnet, beispielsweise in mehreren Sphären oder Zylindern. Jeder Körper besteht vorzugsweise aus mehreren Materialschichten. Den Kern eines jeden Körpers bildet vorzugsweise ein wabenförmiges Gitter aus einem hitzebeständigen, nahrungsmittelerprobten Material, beispielsweise einem hitzebeständigen, nahrungsmittelerprobten Kunststoff. Die Wabentiefe beträgt in bevorzugten Ausführungsformen der Erfindung ca. 1-2 mm, kann aber auch gegebenenfalls von diesen Maßen abweichen. In den Waben befindet sich die vorzugsweise feste Aufgussmasse beziehungsweise Brühmasse. Die Waben sind vorzugsweise beidseitig mit einer Filterschicht verschlossen, welche vorzugsweise verhindert, dass die Füllung der Wabenkammern diese verlässt. Eine Abdeckfolie, welche den Filter bedeckt, schützt diesen vorzugsweise vor einer Benetzung durch die Aufgussflüssigkeit oder Brühflüssigkeit bevor diese die gewünschte Aufgusstemperatur beziehungsweise Brühtemperatur erreicht hat.

Bei dieser Ausführungsform, die insbesondere, aber nicht ausschließlich zur Bereitstellung von Tee geeignet ist, löst sich die Abdeckfolie vorzugsweise vom Filter der die Brühmasse enthaltenden Körper und gibt diese der Benetzung durch die Aufgussflüssigkeit oder Brühflüssigkeit frei, vorzugsweise sobald die Aufgussflüssigkeit oder Brühflüssigkeit, welche die lamellenförmigen Körper umspült, eine bestimmte Schwellentemperatur überschritten hat. Die Flüssigkeit dringt vorzugsweise durch den Filter in den Kern der Körper vor, löst die Geschmacksstoffe und Aromastoffe aus der Aufgussmasse oder Brühmasse, die sich dann vorzugsweise über Diffusion und/oder mit der Strömung der Aufgussflüssigkeit oder Brühflüssigkeit in dieser verteilen.

Bei jenen Ausführungsformen, bei denen die Aufgussmasse beziehungsweise Brühmasse enthaltenden Körper, die vorzugsweise auch ein Filtersystem enthalten, bereits am Dosendeckel angebracht sind, verfügen Deckel und Zylinder der Dose vorzugsweise bereits über alle relevanten Funktionselemente der Erfindung. Die Aufgussflüssigkeit oder Brühflüssigkeit befindet sich hier vorzugsweise direkt in der Dose, welche für sich eine geschlossene Kammer darstellt, die vorzugsweise gegen die Aufgussmasse durch die sich bei Hitze von den lamellenförmigen Körpern lösende Folie und gegen die Heizmischung durch eine hitzebeständige Hülse des Heizelements abgetrennt ist. Die Dose schließt bei dieser Ausführungsform nach unten vorzugsweise mit einem einfachen Bodenblech ab.

Die Aufguss- oder Brühmasse kann in einer Kammer vom restlichen Volumen der Dose und/oder von der Kammer mit Aufguss- oder Brühflüssigkeit vorzugsweise über ein flüssigkeitsdichtes und/oder gasdichtes (z.B. luftdichtes) Trennelement getrennt sein. Das Trennelement ist vorzugsweise so ausgebildet und/oder vorgesehen, dass es ab einer gewissen Temperatur und/oder ab einem gewissen Druck öffnet und die Aufguss- oder Brühflüssigkeit in die Kammer mit der Aufguss- oder Brühmasse fließen kann. Als Trennelement kann z. B. eine Berstscheibe, ein Ventil, eine Abdeckfolie und/oder eine mit einer Trennfolie versehene (z. B. überzogene) Trennscheibe verwendet werden.

Bei einer Berstscheibe handelt es sich um eine Scheibe mit vordefinierten Sollbruchstellen, an denen die Scheibe bei Ausübung eines Zwanges, etwa durch Anstieg der Temperatur oder des Druckes oder einer Kombination beider Faktoren durchlässig wird.

Das Ventil öffnet sich, wenn an ihm die Aufgussflüssigkeit oder Brühflüssigkeit, die an seinem oberen Ende anliegt, einen bestimmten Schwelldruck und/oder eine bestimmte Schwellentemperatur überschreitet und gibt dann den Weg für die Flüssigkeit in die Kammer mit der Aufgussmasse oder Brühmasse frei.

Die Trennfolie auf der Trennscheibe reißt ab einem bestimmten Überdruck der an ihr anliegenden Aufgussflüssigkeit oder Brühflüssigkeit ein. Unterstützt wird dieser Reißvorgang vorzugsweise durch bestimmte Vorkehrungen an der Trennscheibe, auf der die Folie angebracht ist. So kann die Trennscheibe beispielsweise über eine Perforation mit scharfen Kanten oder ein Dornenfeld verfügen, das den Reißvorgang der Trennfolie unterstützt, sobald diese an die Trennscheibe gepresst wird. Die Trennscheibe für sich ist durchlässig für Flüssigkeiten, aber hält Druckunterschieden zwischen den Kammern mechanisch stand. Die Trennfolie ist flexibel, aber vor dem definierten Einreißen durch Druckbelastung undurchlässig für Flüssigkeiten. Die Kombination von Trennfolie und Trennscheibe hält Druckbelastungen stand und wird erst bei einer bestimmten Druckbelastung permeabel.

Die Kammer mit der Aufguss- oder Brühmasse kann beispielsweise am Dosenboden vorgesehen sein.

Die am Boden der Dose befindliche Kammer mit der Aufgussmasse oder Brühmasse schließt vorzugsweise nach unten mit einem Filtersystem ab, durch das die unter Druck stehende Aufgussflüssigkeit beziehungsweise Brühflüssigkeit die Dose verlässt, nachdem sie die Aufgussmasse oder Brühmasse durchdrungen und die darin enthaltenen Aromastoffe und Geschmacksstoffe extrahiert hat. Ein solches Filtersystem besitzt vorzugsweise von sich aus die Eigenschaft, dass es luftdurchlässig ist.

Bei längerer Exposition an der Luft leidet jedoch die Qualität der Aufgussmasse oder Brühmasse erheblich. Luftfeuchtigkeit kann aufgenommen werden und zu Schimmelbildung in der Aufgussmasse oder Brühmasse führen. Geschmacksstoffe und Aromastoffe können vom Luftsauerstoff oxidiert und dadurch zerstört werden. Aus diesem Grund ist es sinnvoll, die Aufgussmasse oder Brühmasse bis zur Verwendung luftdicht in der erfindungsgemäßen Vorrichtung zu verschließen. Zu diesem Zweck kann optional eine Abreißfolie vorgesehen sein, welche vorzugsweise das Filtersystem auf der Unterseite der Dose bedeckt und vorzugsweise bei der Verwendung der Dose vom Nutzer einfach entfernt werden kann.

Alternativ oder zusätzlich kann als Verschluss für das Filtersystem nach unten eine sich selbst lösende Folie vorgesehen sein, wie sie oben beschrieben wurde. Diese sich selbst lösende Folie gibt vorzugsweise ihre Haftung am Filtersystem auf, sobald sie von einer Seite einer bestimmten Schwellentemperatur ausgesetzt und/oder durch Flüssigkeit benetzt wird. Dies kann z. B. dann der Fall sein, wenn die heiße Aufgussflüssigkeit oder Brühflüssigkeit sie aus der Kammer mit der Aufgussmasse oder Brühmasse und nach Durchqueren des Filtersystems erreicht.

Die sich selbst lösende Folie besitzt den Vorteil, dass sie genau dann das Filtersystem freigibt, wenn das fertige Getränk bereit ist, die erfindungsgemäße Vorrichtung zu verlassen. Filtersystem und Aufgussmasse beziehungsweise Brühmasse sind damit so lange wie möglich gegen schadhafte äußere Einflüsse geschützt.

Alternativ oder zusätzlich kann als Verschluss für das Filtersystem nach unten eine sich auflösende, verzehrbare Abdeckung vorgesehen sein. Der Auflösungsprozess für diese Abdeckung setzt vorzugsweise dann ein, wenn die Abdeckung in Kontakt mit der Aufgussflüssigkeit oder Brühflüssigkeit tritt. Bei der Abdeckung kann es sich z. B. um eine geschlossene Schicht eines wasserlöslichen, genussfähigen Stoffes handeln, die auf dem Filter aufliegt.

Alternativ oder zusätzlich kann die Abdeckung des Filters dadurch erreicht werden, dass der Filter mit einer wasserlöslichen, genussfähigen Substanz imprägniert ist, welche seine Poren verschließt.

Alternativ oder zusätzlich kann das Filtersystem mit einem Ventil gegen die Atmosphäre der Umgebung abgeschlossen sein. Dieses Ventil öffnet sich vorzugsweise, sobald an ihm die unter Druck stehende Aufgussflüssigkeit oder Brühflüssigkeit am zum Doseninneren gerichteten Ende anliegt.

Das Filtersystem kann erfindungsgemäß - alternativ oder zusätzlich zu den oben beschriebenen Mitteln - dadurch gegen die Umgebungsatmosphäre geschützt sein, dass es mit einer aufgesetzten Tasse bedeckt ist. Die Tasse wird vorzugsweise dadurch an der erfindungsgemäßen Vorrichtung gehalten, dass sie über einen Unterdruck angesaugt wird, unter dem die Kammer mit der Aufgussmasse oder Brühmasse und das darin angrenzende Filtersystem stehen. Mit diesem Unterdruck kann die erfindungsgemäße Vorrichtung bereits bei der Herstellung beaufschlagt werden. Der Unterdruck wird vorzugsweise dann erst aufgelöst, wenn die unter einem Überdruck stehende Aufgussflüssigkeit oder Brühflüssigkeit in die Aufgussmasse oder Brühmasse fassende Kammer eindringt. Nach Auflösung des Unterdruckes löst sich die Tasse vorzugsweise vom Rest der Vorrichtung und kann durch den Nutzer von dieser abgenommen werden.

Als Material für die Tasse kommt dabei jeder formstabile und unterdruckstabile Stoff in Frage, z. B. ein Metallblech oder ein entsprechender Kunststoff, welcher der Unterdruckmontage der Tasse standhält. Vorzugsweise besteht die Tasse aus einem solchen Material.

Derartige Tassen lösen auf besonders elegante Weise zwei Aufgaben gleichzeitig: Sie schützen die gegen schadhafte äußere Einflüsse empfindliche Aufgussmasse oder Brühmasse und stellen gleichzeitig zum exakt richtigen Zeitpunkt ein Trinkgefäß zum Konsum des fertigen Getränks zur Verfügung.

Das Bereitstellen von Trinkgefäßen zum Verzehr des fertigen Getränks stellt keine Besonderheit spezieller Ausführungsformen der Erfindung dar. Auch andere besondere Ausführungsformen der Erfindung bieten ein solches Element für den Nutzer an.

In Ausführungsbeispielen, in denen das Trinkgefäß keiner mechanischen Belastung durch einen Unterdruck standhalten muss, kann das Trinkgefäß aus jedem beliebige Stoff gestaltet sein, der zur Verarbeitung von Einwegtrinkgefäßen geeignet ist, wie etwa Pappe, ein Metall, Kunststoff aber auch zum Verzehr geeignete Materialien, wie etwa Gebäck, Kekse, Waffeln und dergleichen. Solche von sich aus porösen Materialien können durch Glasuren aus verschiedenen Sacchariden flüssigkeitsdicht gemacht werden. Die Nahrungsmittelindustrie hat hierfür bereits zahlreiche, elegante Lösungen gefunden und in die Realität umgesetzt, auf die hier zurückgegriffen werden kann.

### Das Heizelement

Räumlich betrachtet bildet das Heizelement vorzugsweise das Kernstück der Vorrichtung, da es sich vorzugsweise im Mittelpunkt der beispielsweise zylinderförmigen Dose befindet. Das Heizelement umfasst vorzugsweise ein hitzebeständiges Behältnis. Dieses Behältnis kann beispielsweise eine robuster Beutel oder eine robuste Hülse sein. Robust im Sinne der vorliegenden Erfindung bedeutet, dass das Behältnis den gegebenen Temperatur- und Druckschwankungen jederzeit standhält.

In einigen besonderen Ausführungsformen der Erfindung stellt ein robuster Beutel die einzige formgebende Komponente des Heizelements dar. Ein Beutel im Sinne der vorliegenden Erfindung ist ein Behältnis, das keine starren Wände besitzt. In weiteren besonderen Ausführungsformen der Erfindung stellt eine robuste Hülse die einzige formgebende Komponente des Heizelements dar.

Beutel oder Hülse sind aus einem Metall, einer Metalllegierung oder einem Kunststoff hergestellt. In ihnen können alle für den Heizvorgang relevanten Komponenten enthalten sein.

In weiteren besonderen Ausführungsformen der Erfindung umfasst das Heizelement neben einer hitzebeständigen Hülse eine flexible Komponente, zum Beispiel eine flexible Kammer, etwa einen flexiblen Schlauch, aus einem hitzeresistenten Material, vorzugsweise einem Metall oder einer Metalllegierung, wobei diese Komponente vor Verwendung der erfindungsgemäßen Vorrichtung vorzugsweise zusammengefaltet und/oder zusammengerollt vorgesehen ist und/oder an der hitzebeständigen Hülse anliegt. An einer Stelle ist sie mit einem Innenraum der hitzebeständigen Hülse verbunden, in dem Gas entsteht. Vorzugsweise ist die Verbindung eine Fluidverbindung, die so gestaltet ist, dass das Gas in die flexible Komponente entweichen kann.

Erfindungsgemäß sind alle denkbaren Anordnungen der zusammengerollten oder zusammengefalteten flexiblen Komponente an der hitzebeständigen Hülse. So kann sie beispielsweise um die hitzebeständige Hülse herum gewickelt sein. Sie kann die Form einer Schnecke oder einer Spirale besitzen oder balgförmige Faltungen aufweisen, um hier nur einige Beispiele zu nennen. Basierend auf der vorliegenden Offenbarung dürften dem Fachmann vielfältige Anordnungen denkbar sein, die alle von der Erfindung erfasst werden.

Die Aufgabe der flexiblen Komponente ist es, während des Aufheizvorgangs zu expandieren und im entfalteten oder entrollten Zustand Volumen in einer Kammer innerhalb der Dose zu beanspruchen. Auf diese Weise dient sie zum Druckaufbau in jener Kammer, in welche sie expandiert.

Triebkraft für das Expandieren der flexiblen Komponente ist vorzugsweise eine dann erwünschte Gasentwicklung in der hitzebeständigen Hülse des Heizelements.

Das Heizelement umfasst vorzugsweise alle technischen Einrichtungen, welche für die Erfüllung ihrer Aufgabe, nämlich das Aufheizen einer Aufgussflüssigkeit oder Brühflüssigkeit und gegebenenfalls auch für den Aufbau eines Druckes in einer angrenzenden Kammer erforderlich sind.

Das Heizelement selbst kann sehr unterschiedliche Formen annehmen. So kann es beispielsweise in der Fertigung einfache Formen annehmen, wie beispielsweise die eines Zylinders oder einer Kugel. Es kann aber auch komplexere Strukturen mit einer oder mehreren Verzweigungen, Verästelungen und Windungen, etwa bei einer spiralförmigen Form, annehmen. Solche Strukturen verfolgen den Zweck, das Oberfläche/ Volumen-Verhältnis der Hülse zu maximieren, um auf diese Weise einen möglichst guten Wärmeenergieübertrag vom Heizelement auf die Aufgussflüssigkeit oder Brühflüssigkeit zu gewährleisten.

Ein möglichst guter Wärmeenergieübertrag zwischen Heizelement und Aufgussflüssigkeit oder Brühflüssigkeit im Sinne der vorliegenden Erfindung liegt dann vor, wenn möglichst viele Bereiche der Flüssigkeit gleichzeitig erhitzt werden, was dann der Fall ist, wenn eine möglichst große Grenzfläche zwischen Heizelement und Flüssigkeit vorliegt und das Material, aus dem das Heizelement gefertigt ist, über eine gute Wärmeleitfähigkeit verfügt. Dabei sollte jedoch vorzugsweise gewährleistet sein, dass das Heizelement selbst bei der Erfüllung seiner Aufgabe in keinem Fall beschädigt wird. Daher kommt der Wahl des Materials, aus dem das Heizelement besteht, eine wichtige Bedeutung zu.

Die hitzebeständige Wand des Heizelements kann beispielsweise aus einem Metall, besonders bevorzugt aus einem Leichtmetall, oder einer Metalllegierung, besonders bevorzugt aus einer Leichtmetalllegierung, gefertigt sein, ohne die Erfindung jedoch darauf beschränken zu wollen. Leichtmetalle und Leichtmetalllegierungen im Sinne der vorliegenden Erfindung sind vorzugsweise alle Metalle und Legierungen, deren spezifisches Gewicht den Wert von 5 g/cm³ nicht überschreitet.

Leichtmetalle besitzen den Vorteil, dass sie das Gesamtgewicht der Erfindung gering halten. In empirischen Untersuchungen haben sich aber auch einige nichttoxische Schwermetalle oder deren Legierungen als Wandmaterial als besonders geeignet erwiesen, etwa Kupfer oder Stahlblech. Sie werden ebenfalls von der vorliegenden Erfindung erfasst.

Kupfer besitzt den Vorteil, dass es ein sehr guter Wärmeleiter ist und bei einer ganzen Reihe von Prozessen chemisch resistent ist.

Stahlblech besitzt den Vorteil geringer Kosten, sehr guter Verarbeitbarkeit, sehr hoher Festigkeit und hoher Hitzebeständigkeit.

Als Material für die Wand des Heizelements können auch Aluminium oder dessen Legierungen verwendet werden. Diese Stoffe besitzen den Vorteil, dass sie sich bei Exposition an der Luft, an elementarem Sauerstoff oder Sauerstoff abspaltenden Substanzen mit einer sehr dünnen aber dichten Oxidschicht überziehen, welche sie vor weiterem chemischem Angriff schützt. Darüber hinaus besitzen diese Stoffe geringe spezifische Gewichte, sind leicht verformbar und im Vergleich zu anderen Stoffen mit ähnlichen Eigenschaften sehr preisgünstig.

In weiteren Ausführungsformen der Erfindung wird als Material für die Wand des Heizelements Stahlblech eingesetzt. Die Vorteile dieses Werkstoffes sind bereits oben erwähnt.

Die Innenseite des metallenen Heizelements kann unabhängig vom verwendeten Material mit einer chemisch resistenten Schicht überzogen sein. Als derlei resistente Schichten bevorzugt werden hierbei Oxide, Boride und Nitride einiger besonders unedler Metalle, etwa des Aluminiums, des Magnesiums, des Calciums, und dergleichen.

Oxide, Nitride und Boride unedler Metalle haben den Vorteil, dass sie chemisch äußerst stabil sind, weil die besonders unedlen Metalle sehr hohe chemische Affinitäten zu Sauerstoff, Stickstoff und Bor aufweisen. Entsprechende Verbindungen edlerer Metalle neigen hingegen schneller dazu, sich an Reaktionen zu beteiligen, bei denen sie reduziert werden.

Das Heizelement kann auch ein keramisches Material, beispielsweise Aluminiumoxid oder Magnesiumoxid, aufweisen oder aus einem solchen ganz oder teilweise bestehen. Erfindungsgemäß können jedoch auch keramische Oxide, Nitride, Carbide und/oder Boride sowie Mischkeramiken aus diesen Verbindungen verwendet werden. Derartige Materialien weisen auch ohne einen weiteren Überzug mit einer chemisch resistenten Schicht eine hervorragende Resistenz auf.

Bezüglich seines Verhaltens gegenüber Drücken, welche sich im Inneren des Heizelements im Zuge der dort stattfindenden Prozesse aufbauen, können verschiedene Gestaltungen Vorteile bieten.

Das Heizelement kann beispielsweise so gestaltet sein, dass es leichten Überdrücken in seinem Inneren standhält. Leichte Überdrücke im Sinne der vorliegenden Erfindung sind dabei vorzugsweise Drücke, welche das 2,5-fache des Normaldrucks von 1013 mbar nicht überschreiten. Das Heizelement kann daher so gestaltet sein, dass es mindestens Überdrücken standhält, die dem 2,5-fachen des Normaldrucks entsprechen. Dies kann den Vorteil haben, dass für die im Heizelement ablaufenden Prozesse auf Stoffe zurückgegriffen werden kann, bei deren Reaktion es zur unerwünschten Entwicklung geringer Mengen von Gasen kommt. Die durch derlei Gase entstehenden Überdrücke können erfindungsgemäß beispielsweise durch Kondensation der Gase zu Flüssigkeiten beim Abkühlen des Heizelements oder durch allmähliches chemisches Binden der Gase durch weitere Additive im Reaktionsgemisch im Heizelement wieder abgebaut werden.

Das Heizelement kann allerdings auch so gestaltet sein, dass es höchstens dem 1,5-fachen des Normaldrucks standhält. Eine geringere Komplexität bei der technischen Ausgestaltung der Erfindung ist in diesem Fall der wesentliche Vorteil von derlei Ausführungsformen. Die geringere Komplexität des Gesamtsystems reduziert wiederum dessen Herstellungskosten im Vergleich zu Systemen mit höheren Drücken.

Die Erfindung umfasst daher auch Ausführungsformen deren Heizelemente keinerlei Überdruck standhalten müssen. Ihre Herstellung ist am kostengünstigsten und für zahlreiche Ausführungsformen der Erfindung vollkommen ausreichend.

Bei weiteren besonderen Ausführungsformen der Erfindung hält das Heizelement Überdrücken im Inneren von mindestens 10 bar, bevorzugt mindestens 12 bar und besonders bevorzugt mindestens 15 bar stand. Solche Überdrücke werden durch die erwünschte Bildung von Gasen bei im Heizelement ablaufenden Prozessen bewerkstelligt. Diese Ausführungsformen ermöglichen die Bereitstellung bestimmter Brühgetränke, für deren Herstellung Überdrücke erforderlich sind, wie dies beispielsweise bei Espresso-Getränken der Fall ist.

Im Heizelement läuft vorzugsweise ein ein- oder mehrstufiger Prozess aus verschiedenen chemischen Reaktionen ab, welche zur Freisetzung der für den Aufguss- oder Brühprozess erforderlichen Wärmeenergie führen. Ausgelöst wird dieser Prozess durch eine äußere mechanische Einwirkung an einer außen an der Dose (z. B. an einem Deckel der Dose) angebrachten Vorrichtung.

Bei der besagten mechanischen Einwirkung kann es sich um das Betätigen eines Druckmechanismus, Ziehmechanismus und/oder Drehmechanismus handeln, der vorzugsweise am Deckel der Dose vorgesehen ist, aber auch an anderen Stellen angeordnet sein kann.

Bei einigen besonderen Ausführungsformen der Erfindung läuft im Heizelement ein mehrstufiger Prozess ab, der mehrere aufeinander folgende chemische Reaktionen umfasst. Ausführungsformen mit mehreren aufeinander folgenden Reaktionsstufen besitzen den Vorteil, dass bei ihnen für den Start des Heizvorgangs und für die eigentliche Freisetzung der erforderlichen Wärmeenergie zum Erhitzen der Aufgussflüssigkeit mindestens zwei verschiedene Teilprozesse genutzt werden können, welche eine unterschiedliche Thermodynamik und Kinetik aufweisen und auf diese Weise den speziellen Anforderungen beider Aufgaben besser gerecht werden als ein einziger Prozess. Dazu zählen zum einen ein zuverlässiger und schneller Start des Heizvorgangs und zum anderen die Lieferung der gewünschten großen Menge an Wärmeenergie und gegebenenfalls auch an Gasen, die für den jeweiligen Aufgussprozess oder Brühprozess erforderlich sind.

Bevorzugte Ausführungsformen der Erfindung sehen nur einen einstufigen Verlauf des Wärmeenergie liefernden Prozesses im Heizelement vor. Bei diesen Ausführungsformen handelt es sich beim Wärmenergie liefernden Prozess um eine oder mehrere gleichzeitig ablaufende Redoxreaktionen zwischen elementarem Sauerstoff und einem oder mehreren weiteren Stoffen als Reaktionspartner des Sauerstoffs.

Spezielle Ausführungsformen der Erfindung greifen dabei auf Stoffsysteme zurück, bei denen sowohl die Reaktionspartner des Sauerstoffs selbst als auch die bei der Reaktion entstehenden Produkte keine Gefahrstoffe sind.

Gefahrstoffe im Sinne der vorliegenden Erfindung sind all jene Stoffe, welche nach gegenwärtig gängigen EU-Richtlinien bei ihrer technischen Handhabung mit einem Gefahrensymbol gekennzeichnet werden müssen. Als Gefahrstoffe eingestuft werden dabei sowohl all jene Stoffe, deren toxisches, Gesundheit oder Umwelt gefährdendes Potential in empirischen Untersuchungen bereits belegt wurde, als auch jene Stoffe, welche leicht entzündlich, brennbar oder Brand fördernd, explosiv, ätzend, reizend oder radioaktiv sind.

Durch mechanische Einwirkung an einer bestimmten Stelle der Außenwand der Dose wird der Weg für ein in der Kammer mit der Aufguss- oder Brühflüssigkeit ebenfalls enthaltenes sauerstoffhaltiges Gasgemisch in das Heizelement geebnet. Dies kann beispielsweise dadurch geschehen, dass die besagte mechanische Einwirkung einen Dorn zwingt, eine lokal begrenzte Perforation des Heizelements hervorzurufen, an deren Stelle dann das sauerstoffhaltige Gasgemisch in das Heizelement einströmt.

Bevorzugte Ausführungsformen der Erfindung besitzen an der perforierten Stelle des Heizelements eine semipermeable Schicht, beispielsweise eine Membran oder eine poröse Tonplatte, welche nach der Perforation das Einströmen des sauerstoffhaltigen Gasgemisches in das Heizelement zwar ermöglicht, aber ein Verlassen fester oder flüssiger Stoffe aus dem Heizelement unterbindet.

Bei Ausführungsformen der Erfindung wird durch die mechanische Einwirkung an einer bestimmten Stelle der Außenwand der Dose ein Rückschlagventil geöffnet, welches das Einströmen des sauerstoffhaltigen Gasgemisches in das Heizelement zulässt, aber ein Rückströmen selbst gasförmiger Stoffe aus dem Heizelement in die Kammer mit der Aufguss- oder Brühflüssigkeit unterbindet.

Empirische Untersuchungen bei der Optimierung der vorliegenden Erfindung haben ergeben, dass insbesondere dann Wärmeenergie in ausreichender Menge und ausreichender Geschwindigkeit freigesetzt wird und ein störungsfreier Ablauf der Reaktion zwischen dem Sauerstoff aus dem einströmenden sauerstoffhaltigen Gasgemisch und den Stoffen im Heizelement gegeben ist, wenn der Anteil von Sauerstoff im sauerstoffhaltigen Gasgemisch einen Wert von mindestens 18 Volumenprozent, bevorzugt aber mindestens 80 Volumenprozent und besonders bevorzugt mindestens 95 Volumenprozent beträgt.

Ebenso haben empirische Untersuchungen ergeben, dass der absolute Gasdruck im Heizelement nach Einströmen des sauerstoffhaltigen Gasgemisches im Druckbereich zwischen 1 bar bis 50 bar, bevorzugt aber im Druckbereich zwischen 2 bar und 30 bar und besonders bevorzugt im Druckbereich zwischen 10 bar und 20 bar liegen sollte.

Im Falle eines einstufigen Verlaufs des Wärmeenergie freisetzenden Prozesses enthält das Heizelement vorzugsweise mindestens ein Metallpulver oder mindestens eine leicht oxidierbare organische Verbindung mit sehr feiner Korngröße.

Sehr feine Korngrößen im Sinne der vorliegenden Erfindung sind vorzugsweise Korngrößen mit einem etwaigen Durchmesser von maximal 100 Mikrometern, bevorzugt aber von maximal 50 Mikrometern und besonders bevorzugt von maximal 20 Mikrometern.

Metallpulver besitzen gegenüber leicht oxidierbaren organischen Verbindungen den Vorteil, dass bei ihrer Reaktion mit Sauerstoff Metalloxide als nicht flüchtige Reaktionsprodukte entstehen, die zu keinem weiteren Druckaufbau im Heizelement führen. Dies ist für einige Ausführungsformen der vorliegenden Erfindung besonders vorteilhaft, weil das Heizelement unter diesen Umständen deutlich geringeren technischen Ansprüchen genügen muss.

Ausführungsformen der Erfindung enthalten als Metallpulver Eisenpulver. Eisenpulver besitzt den Vorteil, dass es besonders preisgünstig ist und technisch in hoch reiner Form in jeder beliebigen Korngröße hergestellt werden kann. Empirische Untersuchungen bei der Optimierung der vorliegenden Erfindung haben ergeben, dass auf Eisenpulver basierende Systeme besonders gut hinsichtlich der auftretenden Wärmeentwicklung bei der Reaktion mit Sauerstoff steuerbar sind.

Weitere Ausführungsform der Erfindung enthalten als Metallpulver - alternativ oder zusätzlich - Zinkpulver. Zink besitzt den Vorteil, dass es ein negativeres elektrochemisches Potenzial besitzt als Eisen und daher beim Kontakt mit Sauerstoff noch reaktiver ist als dieses, was vorteilhaft ist für eine intensive Wärmeentwicklung bei der Reaktion.

Weitere besondere Ausführungsform der Erfindung enthalten als Metallpulver - alternativ oder zusätzlich - Magnesiumpulver. Magnesium besitzt eine gegenüber Zink und Eisen noch höhere Affinität zu Sauerstoff und ist vor allem für jene Ausführungsbeispiele besonders vorteilhaft, bei denen maximale Wärmentwicklungen erforderlich sind.

Weitere Ausführungsform der Erfindung enthalten als Metallpulver - alternativ oder zusätzlich - Calciumpulver. Calciumpulver besitzt den Vorteil bei einer ähnlichen Reaktivität mit Sauerstoff wie beim Magnesium deutlich preisgünstiger zu sein.

Weitere Ausführungsform der Erfindung enthalten als Metallpulver - alternativ oder zusätzlich - Aluminiumpulver. Aluminium besitzt als Reaktionspartner des Sauerstoffs den Vorteil, dass bei seiner Reaktion mit dem Sauerstoff ein amphoteres Reaktionsprodukt entsteht, das über einen weiten Parameterraum chemisch völlig inaktiv ist.

Weitere Ausführungsformen der Erfindung greifen - alternativ oder zusätzlich - auf weitere Metallpulver zurück, wobei Metalle aus dem d-Block des Periodensystems der Elemente, wie beispielsweise Nickel, Mangan, Chrom Kupfer und dergleichen besonders bevorzugt sind.

Einige spezielle Ausführungsformen der Erfindung greifen auf Gemische aus mehreren verschiedenen Metallpulvern zurück, insbesondere den vorgehend erwähnten. Diese Ausführungsformen haben den Vorteil, dass ihre Gemische reaktiver sind als die einzelnen Metalle, was auf die katalytische Wirkung einiger Metalle zurückzuführen ist.

Empirische Untersuchungen bei der Optimierung der vorliegenden Erfindung haben gezeigt, dass einige Metallpulver noch reaktiver sind, wenn ihnen bestimmte Additive beigemischt werden. Solche Additive können beispielsweise katalytisch wirkende Feststoffe oder Flüssigkeiten sein. Als besonders geeignet erwiesen sich einige flüssige Elektrolyten und Aktivkohle
Bei bestimmten Ausführungsformen der Erfindung kann daher dem Metallpulver ein Elektrolyt zugesetzt werden.

Ausführungen der Erfindung nutzen als Elektrolyt eine wässrige Lösung mit Kationen der ersten beiden Hauptgruppen des Periodensystems der Elemente und Halogenid-Ionen als Anionen.

Weitere Ausführungsformen der Erfindung nutzen als Elektrolyt Salze der Schwefelsäure, der schwefligen Säure, der Salpetersäure, der salpetrigen Säure, der Phosphorsäure und der phosphorigen Säure.

Darüber hinaus können Ausführungsformen der Erfindung auf ph-neutrale Elektrolyten zurückgreifen. Diese Ausführungsformen besitzen den Vorteil, dass nach der Verwendung der Dose keine ätzenden beziehungsweise korrosiven Stoffe mehr in der Dose enthalten sind.

Weitere Ausführungsformen der Erfindung greifen auf leicht saure oder leicht alkalische Elektrolyten zurück. Diese Elektrolyten besitzen den Vorteil, dass bei ihrer Anwesenheit einige Metallpulver noch reaktiver sind.

Ausführungsformen der Erfindung können beispielsweise als Metallpulver Zinkpulver und als Elektrolyt eine wässrige Natriumhydroxid-Lösung nutzen.

Einige Ausführungen der Erfindung nutzen als Additiv zum Metallpulver ausschließlich Aktivkohle. Diese Ausführungsformen besitzen den Vorteil, dass vor der Verwendung ausschließlich feste Stoffe im Heizelement vorhanden sind. Damit ist die Gefahr eines Auslaufens bei Produktionsfehlern praktisch ausgeschlossen.

Weitere Ausführungsformen der Erfindung nutzen Aktivkohle als zusätzliches Additiv in Kombination mit einem flüssigen Elektrolyten. Solche Ausführungsformen besitzen eine vorteilhaftere Reaktionskinetik im Heizelement verglichen mit jenen Varianten, bei denen allein ein Elektrolyt oder allein Aktivkohle als Additiv eingesetzt werden.

Eine spezielle Ausführungsform der Erfindung verwendet Eisenpulver in Kombination mit Aktivkohle als Reaktionspartner für das sauerstoffhaltige Gasgemisch, wobei das Eisen/Aktivkohlegemisch leicht mit einer wässrigen Natriumchlorid-Lösung angefeuchtet ist.

Empirische Untersuchungen bei der Optimierung der vorliegenden Erfindung haben gezeigt, dass als Elektrolyt hierbei eine wässrige Natriumchlorid-Lösung zu bevorzugen ist, welche eine Konzentration von mindestens 3,6 g NaCl in 100 ml Lösung, bevorzugt aber mindestens 18 g NaCl in 100 ml Lösung und besonders bevorzugt mindestens 35 g NaCl in 100 ml Lösung besitzt.

Ebenso haben empirische Untersuchen gezeigt, dass der Elektrolytanteil vorzugsweise nicht mehr als 40 Massenprozent, stärker bevorzugt aber nicht mehr als 35 Massenprozent und besonders bevorzugt nicht mehr als 30 Massenprozent des Reaktionsgemisches Eisen/ Aktivkohle/ Elektrolyt umfassen sollte.

Empirische Untersuchungen haben aber auch gezeigt, dass der Elektrolytanteil bevorzugt nicht weniger als 15 Massenprozent des Reaktionsgemisches Eisen/ Aktivkohle/ Elektrolyt umfassen sollte.

Bevorzugte Ausführungsformen der Erfindung enthalten nicht weniger als 35 Massenprozent bevorzugt nicht weniger als 40 Massenprozent und besonders bevorzugt nicht weniger als 45 Massenprozent Metallpulver.

Weitere bevorzugte Ausführungsformen der Erfindungen enthalten nicht mehr als 65 Massenprozent, bevorzugt aber nicht mehr als 60 Massenprozent und besonders bevorzugt nicht mehr als 55 Massenprozent Metallpulver im Reaktionsgemisch bestehend aus Metallpulver, Aktivkohle und Elektrolyt.

Ausführungsformen der Erfindung können im Heizelement leicht entzündliche organische Verbindungen sehr feiner Korngröße als Reaktionspartner für den Sauerstoff enthalten. Solche organischen Verbindungen sind beispielsweise Cellulose oder Amylose, einige Öle, etwa Leinöl, oder andere mehrfach ungesättigte Fette, welche auf einer Trägersubstanz, etwa nanokristalliner Kieselsäure sehr fein verteilt sind. Empirische Untersuchungen haben gezeigt, dass diese Substanzen in hoch dispergierter Form sehr leicht entzündlich sind. Hierzu reichen geringe elektrostatische Entladungen aus, wie sie beim schnellen Einströmen des sauerstoffhaltigen Gemisches in das Heizelement an den Öffnungen des Heizelements durch dort wirkende Reibungskräfte auftreten.

Einige Ausführungsformen der Erfindung sehen nur einen zweistufigen Verlauf des Wärmeenergie liefernden Prozesses im Heizelement vor.

Zweistufige Prozesse haben beispielsweise den Vorteil, dass hierbei über längere Zeiträume Wärmeenergie freigesetzt wird. Außerdem können für beide Prozessstufen unterschiedliche Reaktionssysteme mit unterschiedlicher Kinetik und Thermodynamik verwendet werden, was eine höhere Flexibilität bei der Einstellung der für den Brühprozess beziehungsweise Aufgussprozess erforderlichen Parameter zur Folge hat.

Bei Ausführungsformen der Erfindung, die auf zweistufige Prozesse zurückgreifen, dient als erste Stufe vorzugsweise eine Redoxreaktion zwischen einem sauerstoffhaltigen Gasgemisch und einem oder mehreren Metallpulvern mit oder ohne weitere Additive wie oben beschrieben.

Als zweite Stufe dient vorzugsweise eine Redoxreaktion zwischen mindestens einem ersten Metall oder einem ersten Halbmetall im elementaren Zustand und einer ersten Verbindung eines zweiten Metalls oder eines zweiten Halbmetalls mit einem Nichtmetall der vierten, fünften, sechsten oder siebenten Hauptgruppe des Periodensystems der Elemente.

Metallverbindungen mit Nichtmetallen der vierten, fünften, sechsten oder siebenten Hauptgruppe des Periodensystems der Elemente haben den Vorteil, dass sie in der Regel salzartige Stoffe sind, die unter Standardbedingungen Feststoffe sind. Als Standardbedingungen wird im Rahmen der vorliegenden Erfindung eine Temperatur von 25° C und ein Druck von 1013 mbar verstanden.

Dem Fachmann sind sämtliche Nichtmetalle der vierten bis siebenten Hauptgruppe des Periodensystems der Elemente geläufig, so dass sie hier nicht mehr erwähnt werden müssen.

Bei der ersten Verbindung des zweiten Metalls oder des zweiten Halbmetalls mit einem Nichtmetall der vierten, fünften, sechsten oder siebenten Hauptgruppe des Periodensystems der Elemente kann es sich beispielsweise um ein Oxid, ein Sulfid, ein Carbid, ein Nitrid oder ein Jodid handeln.

Diese Verbindungen besitzen z. B. den Vorteil, dass die meisten von ihnen bei Kontakt mit Feuchtigkeit keine korrosiven und hochtoxischen Gase bilden, wie etwa einige Metallchloride, Bromide oder Fluoride, welche unter diesen Umständen Halogenwasserstoffe freisetzen.

Das zweite Metall ist in diesem Zusammenhang vorzugsweise ein Element des d-Blocks oder des p-Blocks des Periodensystems der Elemente.

Wie bei den Elementen des d-Blocks so weiß der Fachmann auch hier sofort, welche Metalle zu den Elementen des p-Blocks zählen, daher bedarf es hier keiner weiteren Erklärungen diesbezüglich.

Metalle des d-Blocks und des p-Blocks sind edler als Metalle des s-Blocks oder des f-Blocks. Dies ist vorteilhaft, da erwünscht ist, dass sie sich bei der Reaktion von ihrem Bindungspartner unter Freisetzung von Wärmenergie trennen.

Dabei ist es im Sinne der Erfindung zweckmäßig, dass es sich bei dem zweiten Metall oder dem zweiten Halbmetall um ein edleres Element handelt als bei dem ersten, elementar vorliegenden Metall oder Halbmetall. Dies ist deswegen der Fall, weil nur unedlere Elemente, die eine höhere Affinität zu ihren nichtmetallischen Bindungspartnern haben als edlere Elemente zu denselben Bindungspartnern, in exothermen chemischen Reaktionen in der Lage sind, den edleren Elementen diese Bindungspartner zu entreißen.

Edle Elemente im Sinne der vorliegenden Erfindung sind Elemente, welche über ein positiveres Standardpotential verfügen als unedlere Elemente. Dem Fachmann ist der Begriff des Standardpotentials geläufig. Er weiß, wie diese Größe definiert ist und kennt ihren technischen Nutzen für die Redoxchemie, daher bedarf es hier keiner weiteren Erläuterung diesbezüglich.

Die vorliegende Erfindung kann dazu benutzt werden, sehr verschiedene heiße Aufgussgetränke oder Brühgetränke genussfertig bereitzustellen. Dabei ist es notwendig, je nach Art des Aufgussgetränks oder Brühgetränks und nach Wahl der Rezeptur, sehr unterschiedliche Temperaturen und Drücke in der Aufgussflüssigkeit oder Brühflüssigkeit einzustellen, um einen optimalen Aufgussprozess oder Brühprozess sicherzustellen. Dies kann bei der vorliegenden Erfindung durch gleich mehrere Parameter bewerkstelligt werden, was die vorliegende Erfindung in ihren potenziellen Einsatzmöglichkeiten sehr flexibel macht.

Je nach Wahl der Reaktionspartner kann die Reaktion zwischen einem unedlen Metall oder Halbmetall in elementarer Form und der Verbindung eines edleren Metalls oder Halbmetalls verschieden intensiv verlaufen. Wählt man beispielsweise ein sehr unedles Metall, etwa Aluminium als Reaktionspartner für ein Oxid eines sehr edlen Metalls, z. B. Kupfer, so verläuft die Reaktion unter erheblich größerer Wärmeentwicklung als eine Reaktion zwischen elementarem Aluminium und einem Oxid des ebenfalls unedlen Metalls Eisen, was letztlich auf die höhere Affinität des Eisens zum Sauerstoff zurückzuführen ist, die höher liegt, als jene des Kupfers, das sich leichter vom Sauerstoff trennt. Die bei der zweiten Redoxreaktion entstehende Wärmeentwicklung lässt sich demnach in einem gewissen Umfang durch die Wahl des ersten und zweiten Metalls beziehungsweise Halbmetalls steuern. Das erste Metall beziehungsweise Halbmetall und die Verbindung des zweiten Metalls beziehungsweise Halbmetalls kann daher beispielsweise so gewählt werden, dass dabei genau jene Wärmeenergie freigesetzt wird, welche für den jeweils gewünschten Aufgussprozess oder Brühprozess erforderlich ist. Als Orientierung bei der Wahl der Reaktionspartner dient hier die elektrochemische Spannungsreihe der Metalle beziehungsweise Halbmetalle, in der die Metalle beziehungsweise Halbmetalle nach ansteigenden Standardpotentialen geordnet sind. Sie ist dem Fachmann ebenfalls bekannt und soll deshalb hier nicht weiter erläutert werden.

Eine weitere erfindungsgemäße Möglichkeit, die Wärmeentwicklung beim zweiten Prozess zu steuern, ist die Wahl der Stoffmengen der Reaktionspartner. Geringere Stoffmengen der Reaktionspartner führen dabei entsprechend zu geringeren Wärmeentwicklungen im Heizelement als größere Stoffmengen der Reaktionspartner.

Da die Wärmeentwicklung im Heizelement möglichst gleichmäßig erfolgen soll, kann es sinnvoll sein, die Reaktionspartner gleichmäßig im Heizelement zu verteilen. Dies ist vor allem dann von besonderer Wichtigkeit, wenn das Heizelement komplexere geometrische Formen annimmt. Erfindungsgemäß kann dies dadurch geschehen, dass die Reaktionspartner in eine Stoffmatrix eingebracht und dort durch gutes Durchmischen gleichmäßig verteilt werden, wobei sich die Stoffe der Matrix vorzugsweise nicht oder nur in geringem Umfang an der Wärmeenergie freisetzenden Reaktion beteiligen.

Erfindungsgemäß kann dem Stoffgemisch aus mindestens einem ersten Metall oder einem ersten Halbmetall und mindestens einer ersten Verbindung eines zweiten Metalls oder zweiten Halbmetalls mit einem Nichtmetall der vierten, fünften, sechsten oder siebenten Hauptgruppe des Periodensystems der Elemente daher noch eine zweite Verbindung eines dritten Metalls oder eines dritten Halbmetalls mit einem Nichtmetall der vierten, fünften, sechsten oder siebenten Hauptgruppe des Periodensystems der Elemente zugefügt werden, welche sich nicht oder nur geringfügig unter Freisetzung von Wärmeenergie an einer Reaktion mit dem ersten Metall oder dem ersten Halbmetall beteiligt. Diese Verbindung eines dritten Metalls oder Halbmetalls dient dann als Matrix für die eigentlichen Reaktionspartner des zweiten Prozesses.

Dabei ist es zweckmäßig im Sinne der vorliegenden Erfindung, dass es sich bei dem dritten Metall oder dem dritten Halbmetall um ein Element handelt, das nicht edler ist, als das erste und zweite Metall oder das erste und zweite Halbmetall, sonst würde sich die Verbindung des dritten Metalls oder Halbmetalls ebenfalls intensiv an der Reaktion beteiligen.

Das dritte Metall oder das dritte Halbmetall kann genauso edel oder unedler als das erste Metall oder Halbmetall sein, d. h., es besitzt das gleiche oder ein negativeres Standardpotential als das erste Metall oder Halbmetall.

In einem solchen Stoffgemisch lässt sich dann die Konzentration der Reaktionspartner nahezu beliebig variieren. Ein solches Vorgehen stellt ebenfalls eine erfindungsgemäße Form der Beeinflussung der entstehenden Wärmeenergiemenge im Heizelement dar.

In speziellen Ausführungsformen der Erfindung weist die Matrix mikrokristallines oder nanokristallines Siliziumoxid, Titanoxid, Zirkonoxid oder Ceroxid auf oder besteht aus diesen Materialien.

Siliziumoxid hat als Matrixmaterial neben seiner hohen thermodynamischen Stabilität den Vorteil, dass es heute in praktisch jeder erforderlichen Korngröße verfügbar ist und von den anderen bevorzugten Matrixmaterialien wegen seines geringen Preises die wirtschaftlichste Alternative darstellt.

Empirische Untersuchungen haben gezeigt, dass Zirkonoxid unter allen bevorzugten Matrixmaterialien während des zweiten Prozesses am wenigsten zu Verklumpungen neigt und dadurch mit dem geringsten technischen Aufwand zurück gewonnen werden kann.

Das Titan aus dem Titanoxid besitzt unter den bevorzugten Matrixmaterialien den Vorteil als TiCl₄ aus dem Reaktionsprodukt am saubersten abgetrennt und wieder in hoch reines TiO₂ überführt werden zu können.

Erfindungsgemäß kann die Matrix auch Stoffe enthalten, welche in der Lage sind, Kohlenstoffdioxid und Wasser zu binden. Diese Stoffe können in sehr geringem Umfang beim ersten Prozess gebildet werden, etwa wenn dort als Reaktionspartner Kaliumpermanganat und Glycerin gewählt wurden. Da die Stoffmengen der Reaktionspartner beim ersten Prozess sehr klein gewählt werden, sind die Stoffmengen dieser Abfallprodukte entsprechend klein. Trotzdem kann es sinnvoll sein, sie chemisch zu binden, um damit einen sich bei der Reaktion aufbauenden Überdruck im Heizelement wieder abzubauen.

Der Matrix kann gegebenenfalls eine gewisse Menge Siliziumdioxid in Kombination mit einem Hydroxid eines Alkalimetalls oder Erdalkalimetalls beigefügt werden. Empirische Untersuchungen haben gezeigt, dass diese Mischung in der Lage ist, Kohlendioxid unter Bildung von Carbonaten chemisch zu binden, und die überschüssigen Hydroxide bei Hitze mit dem Siliziumdioxid zu einem Alkali-Salz oder Erdalkali-Salz der Kieselsäure reagieren und auf diese Weise neutralisiert werden.

Bei einer weiteren Ausführungsformen der Erfindung befindet sich in der Matrix ein Stoffgemisch aus nanokristallinem Siliziumoxid in Kombination mit nanokristallinem Magnesiumoxid. Empirische Untersuchungen haben gezeigt, dass auch dieses Stoffgemisch in der Lage ist, Kohlenstoffdioxid chemisch zu binden.

Nanokristalline Stoffe im Sinne der vorliegenden Erfindung sind Stoffe, deren Korndurchmesser im Zehntel bis Hundertstel Mikrometerbereich liegt oder noch kleiner ist.

Derlei Gas bindende Additive sind insbesondere in jenen Ausführungsformen der Erfindung zweckmäßig, bei denen ein starker Überdruck im Heizelement gegenüber der umgebenden Kammer unerwünscht ist. Starke Überdrücke im Sinne der vorliegenden Erfindung sind all jene Drücke, welche das 2,5-fache des Normaldruckes überschreiten.

Erfindungsgemäß kann die Ausbildung eines starken Überdruckes in der Hülse erwünscht sein. In diesen Fällen ist es besonders vorteilhaft, dem Reaktionsgemisch nicht Gas bindende Additive als Matrix beizumischen, sondern solche Stoffe, die beim Erhitzen selbst nichttoxische und nichtkorrosive Gase freisetzen. Die Additive sind vorzugsweise homogen im Reaktionsgemisch verteilt. Alternativ können sie vermehrt dort vorgesehen sein, wo die Hülse des Heizelements die Gase in eine weitere Kammer abgibt. Das Reaktionsgemisch und/oder die Additive sind vorzugsweise so gewählt, dass es auch bei einer regulären Aktivierung der Vorrichtung, wenn sich ausreichend Aufguss- oder Brühflüssigkeit in der Vorrichtung befindet, zu einer Gasentwicklung kommt. Die Additive sind vorzugsweise nicht vermehrt an den Rändern der Hülse vorgesehen. Das Heizelement ist vorzugsweise so ausgebildet, dass die Gasfreigabe den zweiten Prozess (insbesondere die Redoxreaktion) nicht unterbricht oder vorzeitig stoppt.

Als nichttoxische, nichtkorrosive Gase können z. B. solche Gase genutzt werden, die in der Atemluft vorkommen, wie beispielsweise Kohlenstoffdioxid, Stickstoff, Wasserdampf oder Sauerstoff. Derlei Gase haben den Vorteil, dass sie bei nicht sachgemäßer Handhabung der Erfindung oder bei fehlerhafter Funktion zu keinerlei Gefährdung der Nutzer führen, weil sie bei ihrer Freisetzung physiologisch unbedenklich und nicht umweltschädigend sind.

Es können beispielsweise Hydrogencarbonate als Gasentwickler in der Matrix genutzt werden, weil sie beim Erhitzen Kohlenstoffdioxid und Wasser freisetzen und selbst keine Gefahrstoffe darstellen.

Beispielsweise kann Natriumhydrogencarbonat (NaHCO₃) alleine oder im Gemisch mit Kaliumhydrogencarbonat (KHCO₃) als Kohlenstoffdioxid-Entwickler dienen.

Alternativ oder zusätzlich kann das zum Überdruckaufbau erforderliche CO₂ durch Reaktion von elementarem Kohlenstoff mit Metalloxiden der Reaktionsmischung für den zweiten Prozess gebildet werden. Diese Varianten besitzen den Vorteil, dass der Prozess der CO₂-Freisetzung hier gleichzeitig als zusätzliche Wärmequelle dient, weil auch die Reaktion zwischen elementarem Kohlenstoff und Metalloxiden stark exotherm verlaufen kann.

Als Alternative oder zusätzliche CO₂-Entwickler können, beispielsweise an Stelle des elementaren Kohlenstoffs, auch verschiedene Kohlenhydrate Verwendung finden. Sie wirken ebenfalls stark reduzierend und produzieren bei ihrer Reaktion mit Sauerstoffquellen als Reaktionsprodukt ebenfalls CO₂ in reichlicher Menge, neben Wasser, das bei den gegebenen Bedingungen ebenfalls gasförmig vorliegt.

Für den Fachmann dürfte anhand der vorgehenden Erläuterungen ebenfalls verständlich sein, dass an Stelle der Kohlenhydrate oder zusätzlich hierzu sämtliche andere organische KohlenwasserstoffVerbindungen in Frage kommen, welche selbst vorzugsweise ebenfalls keine Gefahrstoffe darstellen und bei ihrer thermischen Zersetzung oder Oxidation vorzugsweise auch keine Gefahrstoffe, sondern lediglich CO₂ und Wasser produzieren. Deren Verwendung wird vom Schutzbereich der vorliegenden Erfindung ebenfalls umfasst.

Erfindungsgemäß können dem Heizelement kristallwasserhaltige Salze zugesetzt werden, welche beim Erhitzen das Wasser abgeben, das unter den gegebenen Bedingungen sofort verdampft und für den Aufbau eines Überdruckes in dem Heizelement sorgt. Diese können alternativ oder zusätzlich zu den oben erwähnten Gasentwicklern verwendet werden.

In diesem Zusammenhang können z. B. Kupfersulfat-Hydrate alleine oder im Gemisch mit anderen Elementen eingesetzt werden, z. B. im Gemisch mit Eisenoxid-Hydraten und/oder anderen kristallwasserhaltigen Oxiden und/oder kristallwasserhaltigen Sulfaten eines Metalls des d-Blocks des Periodensystems der Elemente.

Alternativ oder zusätzlich können dem Heizelement zudem unter Standardbedingungen feste Peroxide zugesetzt werden, welche beim Erhitzen Sauerstoff abgeben, der für den Aufbau eines Überdrucks in dem Heizelement sorgt. Der Fachmann kennt solche Verbindungen, daher bedarf es hier keiner erschöpfenden Aufzählung derselben.

Es kann beispielsweise Bariumperoxid (BaO₂) als Sauerstoffquelle in dem Heizelement der Hülse Verwendung finden.

Im Sinne der vorliegenden Erfindung kann es zweckmäßig sein, die Matrix mit den Reaktionspartnern für den zweiten Prozess zu einer Pille zu verpressen, um Hohlräume dazwischen zu minimieren. Dies ist deshalb sinnvoll, weil dadurch eine stärkere räumliche Nähe der Reaktionspartner zueinander geschaffen wird, was eine vollständigere Reaktion der eingesetzten Stoffe zur Folge hat.

Ein auf diese Weise gestaltetes Heizelement ist in der Lage, wesentlich mehr Wärmenergie zu produzieren, als für einen klassischen Brühvorgang bei Brühgetränken oder zur Bereitstellung von Aufgussgetränken notwendig ist. Für den Fachmann dürfte anhand der obigen Beschreibung der Erfindung klar werden, dass bei dem zweiten Prozess im Reaktionsgemisch Temperaturen entstehen können, welche die Schwelle von 1000°C weit überschreiten können und sogar zur Schmelze jener Metalle oder Halbmetalle führen können, welche an der Reaktion beteiligt sind. Der zweite Prozess stellt demnach eine hoch effektive Wärmequelle dar, die es ermöglicht, relativ kleine, aber sehr leistungsfähige Heizelemente herzustellen, was einen weiteren bedeutenden Vorteil der vorliegenden Erfindung gegenüber dem Stand der Technik darstellt.

Das erfindungsgemäße Heizelement nimmt vor der Verwendung der Vorrichtung vorzugsweise nicht mehr als 15 % bevorzugt aber nicht mehr als 10 % und besonders bevorzugt nicht mehr als 5 % des Volumens der gesamten Vorrichtung ein.

Die Reaktionsmischung kann so ausgelegt werden, dass während des Betriebs der Vorrichtung die Aufgussflüssigkeit oder Brühflüssigkeit der Vorrichtung zumindest zeitweise und stellenweise bis auf Temperaturen, die für den Aufgussvorgang oder Brühvorgang optimal sind, erhitzt und, falls erforderlich für gewisse, für einen Aufgussvorgang oder Brühvorgang optimale Zeiträume, gehalten wird. Dies kann durch Maßnahmen erfolgen, wie sie oben beschrieben wurden.

Wärmeverluste an die Umgebung, keine homogene Temperaturverteilung in der Aufgussflüssigkeitskammer oder Brühflüssigkeitskammer sowie die Wärmekapazität der Dose können es erforderlich machen, dass das Heizelement der erfindungsgemäßen Vorrichtung so ausgelegt ist, dass es mehr Wärmeenergie produziert, als theoretisch für die Erwärmung der Aufgussflüssigkeit oder Brühflüssigkeit erforderlich wäre.

Temperaturen, die für den Aufgussvorgang oder Brühvorgang im Sinne der vorliegenden Erfindung optimal sind, sind Temperaturen, die nicht mehr als 15°C, bevorzugt aber nicht mehr als 10°C und besonders bevorzugt nicht mehr als 5°C unterhalb des Siedepunktes der Aufgussflüssigkeit oder Brühflüssigkeit unter Standardbedingungen (Temperatur von 25° C und Druck von 1013 mbar) liegen.

Die erfindungsgemäße Vorrichtung kann so ausgelegt sein, dass die für einen optimalen Aufgussvorgang beziehungsweise Brühvorgang erforderlichen Zeiträume nicht länger als eine Minute betragen.

Unter Umständen können die für einen optimalen Aufgussvorgang beziehungsweise Brühvorgang erforderlichen Zeiträume allerdings auch mindestens 3, bevorzugt mindestens 3,5 und besonders bevorzugt mindestens 4,5 Minuten betragen.

Bei der Aufgussflüssigkeit oder Brühflüssigkeit kann es sich gemäß allen Ausführungsformen der Erfindung beispielsweise um reines Wasser handeln. Bei der festen Aufgussmasse oder Brühmasse kann es sich beispielsweise um Kaffeepulver handeln. In diesem Fall sind die Heizelemente vorzugsweise so angepasst, dass sie nach ihrer Aktivierung Wärmeenergie abgeben, die ausreicht, die Aufgussflüssigkeit oder Brühflüssigkeit zumindest zeitweise über die Temperaturschwelle von 85°C, bevorzugt aber über 90°C und besonders bevorzugt über 95°C zu erhitzen (vorzugsweise die Durchschnittstemperatur in der Kammer und/oder die Temperatur mit der die Flüssigkeit auf die Aufgussmasse gelangt).

Das Stoffmengenverhältnis zwischen der Stoffmenge des ersten elementaren Metalls oder des ersten elementaren Halbmetalls zur Stoffmenge der Verbindung des zweiten Metalls oder des zweiten Halbmetalls kann mindestens den Wert 0,5, bevorzugt aber mindestens den Wert 1 und besonders bevorzugt mindestens den Wert 1,5 betragen.

Der Fachmann weiß, dass die Stoffmenge in der Chemie in Mol einer Substanz angegeben wird. Er kennt diese Größe und weiß die beteiligten Substanzen mit Hilfe dieser Größe zu quantifizieren.

Empirische Untersuchungen haben gezeigt, das ein Stoffmengenverhältnis zwischen der Stoffmenge des ersten elementaren Metalls oder des ersten elementaren Halbmetalls zur Stoffmenge der Verbindung des zweiten Metalls oder des zweiten Halbmetalls von mindestens 0,5 bereits ausreicht, um eine Reaktion zwischen diesen Stoffen ablaufen zu lassen, die zu einer für die jeweiligen Prozesse ausreichenden Freisetzung von Wärme führt.

Empirische Untersuchungen haben aber ebenso gezeigt, dass ein Stoffmengenverhältnis zwischen der Stoffmenge des ersten elementaren Metalls oder des ersten elementaren Halbmetalls zur Stoffmenge der Verbindung des zweiten Metalls oder des zweiten Halbmetalls von mindestens 1 das Risiko einer Fehlzündung im Reaktionsgemisch für den zweiten Prozess minimiert.

Ebenso haben empirische Untersuchungen gezeigt, dass ein Stoffmengenverhältnis zwischen der Stoffmenge des ersten elementaren Metalls oder des ersten elementaren Halbmetalls zur Stoffmenge der Verbindung des zweiten Metalls oder des zweiten Halbmetalls von mindestens 1,5 die Wärmeleitfähigkeit des Heizelements erhöht und auf diese Weise zu einer verbesserten Heizleistung desselben führt.

Alle Ausführungsformen der Erfindung können technisch so gestaltet sein, dass deren großtechnische Herstellung einfach und kostengünstig umsetzbar ist. Damit ist gewährleistet, dass die Produktion der erfindungsgemäßen Vorrichtungen zu vertretbaren Marktpreisen erfolgen kann.

Die einfache Umsetzbarkeit der Herstellung manifestiert sich beispielsweise darin, dass einige der denkbaren Ausführungsformen aus einem zylinderförmigen Gehäuse, vorzugsweise aus Metall, hergestellt werden können, das an der Oberseite mit einem Deckel und an der Unterseite mit einem Boden versehen wird, wobei vorzugsweise nicht alle technischen Komponenten der erfindungsgemäßen Vorrichtungen zwingend an Deckel und Boden angebracht sind. Die einzelnen Komponenten besitzen im Idealfall eine geringe strukturelle Komplexität, wodurch sie alle in nur wenigen und einfachen Arbeitsschritten hergestellt werden können.

Eine geringe strukturelle Komplexität der Komponenten im Sinne der vorliegenden Erfindung meint, dass sich die Formen geschilderter Bauteile an einfachen geometrischen Figuren und Körpern orientieren und durch wenige Schneidschritte, Frässchritte, Stanzschritte, Sägeschritte und/oder dergleichen aus gängigen industriellen Materialien und Verbundstoffen herstellbar sind und vor deren Integration in das zylinderförmige Gehäuse keiner aufwändigen Montage bedürfen.

Es kann von Vorteil sein, wenn die erfindungsgemäße Vorrichtung einen oder mehrere der folgenden Merkmale zeigt:
- Die Reaktionen im Heizelement entwickeln Gas oder Gase, die vorzugsweise in der Kammer mit Aufgussflüssigkeit oder Brühflüssigkeit zu einem Druck von mindestens 5 bar, mindestens 7 bar, mindestens 10 bar, mindestens 12 oder mindestens 15 bar führen.
- Die Vorrichtung ist eine Einwegvorrichtung.
- Die Aufgussflüssigkeit oder Brühflüssigkeit liegt während des Betriebs der Vorrichtung zumindest zeitweise und stellenweise weniger als 15°C, bevorzugt aber weniger als 10°C und besonders bevorzugt aber weniger als 5°C unterhalb des Siedepunktes der Aufgussflüssigkeit oder Brühflüssigkeit unter Standardbedingungen.

- In der Vorrichtung existieren nach Verwendung keinerlei Gefahrstoffe in bedeutender Stoffmenge mehr.
- Das Heizelement umfasst zusätzlich zur Metallhülse eine flexible Komponente, bei der es sich um einen zusammengefalteten oder zusammengerollten Schlauch handelt, der sich beim Aufheizvorgang entrollt oder entfaltet.
- Das Heizelement dient neben dem Aufheizen der Aufgussflüssigkeit oder Brühflüssigkeit zusätzlich dem Aufbau eines Druckes im Inneren der erfindungsgemäßen Vorrichtung.

### Kurzbeschreibung der Figuren

Bevorzugte Ausführungsformen der Erfindung werden nachfolgend unter Bezugnahme auf die Zeichnungen beispielhaft beschrieben. Es handelt sich dabei lediglich um schematische Darstellungen, die häufig zur Verdeutlichung bestimmter Aspekte andere (optionale) Strukturen nicht darstellen oder aber auch verschiedene optionale, miteinander einhergehende Aspekte in einer Darstellung berücksichtigen. Gleiche Bezugszeichen sowie Bezugszeichen, die um 100 versetzt sind, weisen in diesem Zusammenhang auf äquivalente, ähnliche, vergleichbare oder gleiche Bauteile in den dargestellten Ausführungsformen hin.

Die gezeigten Ausführungsformen können innerhalb des Schutzumfangs der Ansprüche in vielerlei Hinsicht verändert werden. Die Offenbarung der Figuren soll den Schutzumfang der Erfindung nicht beschränken. Dabei ist zu beachten, dass die Merkmale der obengenannten Ausführungsformen und der nachfolgend beschriebenen Ausführungsbeispiele in einer einzigen Ausführungsform kombiniert werden können. Ausführungsformen der Erfindung können daher je nach Ausgestaltung alle oder nur einige der obengenannten Merkmale aufweisen. Es zeigen:
- Fig. 1: eine schematische Darstellung einer erfindungsgemäßen Vorrichtung gemäß einer ersten Ausführungsform;
- Fig. 2: eine schematische Darstellung einer erfindungsgemäßen Vorrichtung gemäß einer weiteren Ausführungsform;
- Fig. 3: eine schematische Darstellung einer erfindungsgemäßen Vorrichtung gemäß einer weiteren Ausführungsform;
- Fig. 4: eine schematische Darstellung einer erfindungsgemäßen Vorrichtung gemäß einer weiteren Ausführungsform;
- Fig. 5: eine schematische Darstellung einer erfindungsgemäßen Vorrichtung gemäß einer weiteren Ausführungsform.

### Detaillierte Beschreibung der Figuren

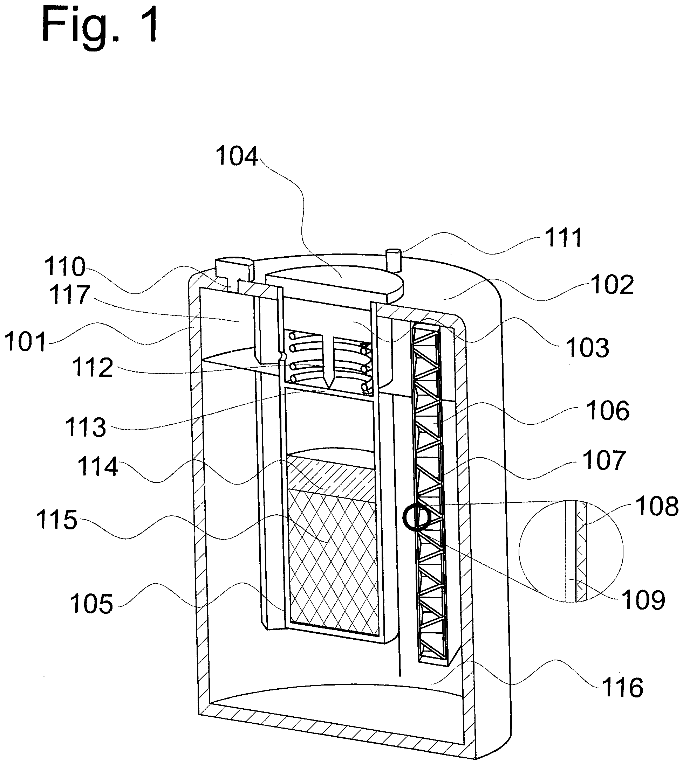

Figur 1 zeigt eine erfindungsgemäße Vorrichtung gemäß einer ersten beispielhaften Ausführungsform. Diese weist eine vorzugsweise zylinderförmige Dose 101 auf, beispielsweise aus Stahlblech, Aluminium oder den oben genannten Legierungen/Materialien. Die Oberseite der Dose, insbesondere der Dosendeckel 102, besitzt einen Startmechanismus zum Auslösen des ersten Energie freisetzenden Prozesses. Der Mechanismus kann beispielsweise als ein Druckknopf 103 ausgebildet sein, der sich beispielsweise in einer Mulde befinden kann. Die Mulde kann im Mittelpunkt des Dosendeckels 102 vorgesehen sein.

Vor der Verwendung ist der Druckknopf 103 vorzugsweise mit einer Schutzkappe 104 versehen, um ihn vor unbeabsichtigtem Betätigen zu schützen. An der Unterseite des Dosendeckels sind das Heizelement 105 und die Aufgussmassekammern oder Brühmassekammern 106 befestigt, wobei das Heizelement vorzugsweise direkt unterhalb des Druckknopfs angebracht ist, während die Aufgussmassekammern oder Brühmassekammern ihn vorzugsweise konzentrisch umgeben. Das Heizelement ragt bis ins Zentrum der Dose. Das Heizelement 105 weist vorzugsweise eine hitzebeständige Hülse oder einen hitzebeständigen Beutel auf, die bzw. der beispielsweise aus Metall oder einer Metalllegierung mit guter Wärmeleitfähigkeit gefertigt sein kann. Das Heizelement kann insbesondere einen Zylinder aus einem Metall oder einer Metalllegierung mit guter Wärmeleitfähigkeit umfassen.

Die Aufgussmassekammern oder Brühmassekammern sind vorzugsweise lamellenförmig und können optional mindestens drei oder genau drei Schichten aufweisen. Den Kern bildet vorzugsweise ein wabenförmiges Kunststoffnetz 107 aus einem bis über 100°C hitzebeständigen, nahrungsmittelerprobten Kunststoff, einem Leichtmetall und/oder dem Material, aus dem die Dose selbst hergestellt ist. Die Tiefe der Waben beträgt vorzugsweise mindestens 0,5 mm, höchstens 5 mm, höchstens 3 mm, höchstens 2 mm und/oder ca. 1 mm, vorzugsweise in Radialrichtung. In den Waben ist die Aufgussmasse oder Brühmasse untergebracht. Die Waben sind vorzugsweise beidseitig mit einem Filter 108 verschlossen, der vorzugsweise verhindert, dass die Füllung der Wabenkammern diese verlässt und/oder zumindest bestimmte Bestandteile der Füllung zurückhält. Eine Abdeckfolie 109, welche den Filter bedeckt, schützt diesen vor einer Benetzung durch eine Aufgussflüssigkeit oder Brühflüssigkeit vor dem Erreichen der gewünschten Aufgusstemperatur oder Brühtemperatur.

Neben dem Startmechanismus (hier der Druckknopf) verfügt der Dosendeckel vorzugsweise noch über eine Ausgussöffnung 110, die optional mit einem Stopfen verschlossen ist, und über ein optionales Überdruckventil 111. Das Überdruckventil und/oder die Ausgussöffnung können jedoch - ebenso wie der Startmechanismus - auch an deren Stellen der Vorrichtung vorgesehen sein.

Das Heizelement selbst enthält einen Zündmechanismus und den zur Erwärmung der Aufgussflüssigkeit oder Brühflüssigkeit erforderlichen Brennstoff. Der Zündmechanismus umfasst in dieser Ausführungsform einen mit dem Druckknopf verbundenen Dorn 112, eine sich darunter befindende Trennwand 113, und ein Stoffgemisch 114.Bei Betätigung des Druckknopfs durch den Nutzer durchstößt der Dorn 112 die Trennwand 113, das sauerstoffhaltige Gasgemisch strömt in das Heizelement und es kommt zu einer Redoxreaktion zwischen dem sauerstoffhaltigen Gasgemisch und dem Stoffgemisch 114. Das Stoffgemisch für diesen ersten Prozess in diesem Ausführungsbeispiel besteht aus Eisenpulver, Aktivkohle, einer wässrigen Natriumchloridlösung und einem wasserspeichernden Mineral wie z.B. Vermiculit. Dieser erste Prozess führt damit zur Freisetzung der Aktivierungsenergie für den Start des zweiten Prozesses, der vorzugsweise ebenfalls eine Redoxreaktion ist.

Das Stoffgemisch für diesen zweiten Prozess bildet vorzugsweise eine unterste Schicht 115 in der Hülse des Heizelements. Dieses Stoffgemisch enthält bei der vorliegenden, beispielhaften Ausführungsform ein unedles elementares Metall in pulverförmiger Form, z. B. Aluminium, Siliziumdioxid, sowie ein Oxid eines zweiten, edleren Metalls, in der vorliegenden, beispielhaften Ausführungsform entweder Kupferoxid oder Eisenoxid (oder beide). Bei der Reaktion zwischen dem unedlen Metall in elementarer Form und dem Kupferoxid oder Eisenoxid wird der Sauerstoff vom edleren Metall Kupfer oder Eisen auf das unedlere Metall Aluminium übertragen. Dies ist ein stark Wärmeenergie freisetzender Prozess, welcher die Temperatur im Inneren der Hülse des Heizelements stellenweise auf weit über 1000°C steigen lassen kann. Das dem Reaktionsgemisch beigefügte Siliziumdioxid beteiligt sich vorzugsweise nicht an der Reaktion. Es dient lediglich dazu, das Reaktionsgemisch genau so zu verdünnen, dass die Reaktion exakt die für einen bestimmten Aufgussprozess oder Brühprozess erforderliche Wärmeenergie liefert und das Reaktionsgemisch nicht zu schnell abreagiert. Die genauen Mischungsverhältnisse der drei Komponenten des Stoffgemisches können vor Herstellung der Dose empirisch bestimmt und auf jedes Aufgussgetränk oder Brühgetränk, das hergestellt werden soll, genau abgestimmt werden.

Das Heizelement überträgt die entstehende Wärme über seine Außenwand auf die es umgebende Aufgussflüssigkeit oder Brühflüssigkeit, wodurch deren Temperatur rapide ansteigt. Die dadurch hervorgerufene Druckerhöhung kann bei Bedarf durch das Überdruckventil im Deckel der Dose wieder abgebaut werden.

Außerdem hat das Aufheizen der Aufgussflüssigkeit oder Brühflüssigkeit vorzugsweise zur Folge, dass sich die Abdeckfolie vom Filter der die Aufgussmasse oder Brühmasse enthaltenden Kammern löst und diesen der Benetzung durch die Aufgussflüssigkeit oder Brühflüssigkeit freigibt. Vorzugsweise werden dann, wie etwa bei einem Teebeutel, die Geschmacksstoffe und Aromastoffe aus der festen Aufgussmasse oder Brühmasse gelöst und verteilen sich in der Aufgussflüssigkeit oder Brühflüssigkeit.

Nach beispielsweise dreiminütiger bis fünfminütiger Einwirkzeit und bei Bedarf kräftigem Schütteln der Dose (wofür diese ausgebildet sein kann) kann das Aufgussgetränk oder Brühgetränk über die Ausgussöffnung aus der Dose zum Verzehr entnommen werden.

Vorzugsweise kann die Dose anschließend bedenkenlos über den Hausmüll entsorgt werden, da sie über keinerlei Gefahrstoffe in bedeutender Menge verfügt und zu diesem Zeitpunkt vorzugsweise auch nicht mehr unter Druck steht.

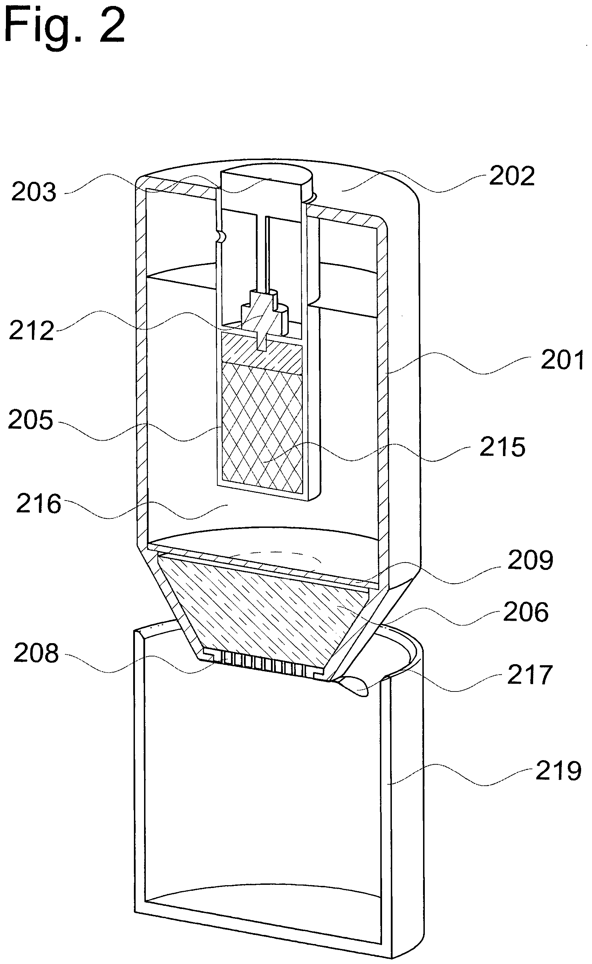

Figur 2 zeigt eine Vorrichtung gemäß einer zweiten beispielhaften Ausführungsform der Erfindung. Die Vorrichtung weist hierbei ebenfalls eine vorzugsweise zylinderförmige Dose 201 auf, beispielsweise aus Stahlblech oder Aluminium. Die Kammer in der Dose, die die Brühflüssigkeit enthält, steht vor der Verwendung vorzugsweise bereits unter einem Druck von 5-30 bar, mit welchem sie bereits bei der Herstellung durch Befüllung mit einem sauerstoffhaltigen Gasgemisch beaufschlagt wurde. Der Druck liegt somit vorzugsweise bereits vor Aktivierung der Vorrichtung vor.

Die Dose 201 weist vorzugsweise ferner einen Deckel 202 auf, der mit einem Druckknopf und/oder einem Drehknopf 203 versehen sein kann.. Dieser dient auch hier vorzugsweise zum Auslösen eines ersten Prozesses, der die Aktivierungsenergie für einen zweiten Prozess liefert, der schließlich die Wärmeenergie zum Aufheizen der Aufgussflüssigkeit oder Brühflüssigkeit zur Verfügung stellt.

Wie bei beim Ausführungsbeispiel von Figur 1 hat das Heizelement 205 vorzugsweise die Form eines Zylinders und ist vorzugsweise im Zentrum der Dose angebracht.

Anders als bei Ausführungsbeispiel 1 wird die Fluidverbindung zwischen dem sauerstoffhaltigen Gasgemisch und dem Brennstoff nicht durch das Durchstoßen einer Trennwand, sondern durch ein über einen Druck- oder Drehknopf zu öffnendes Ventil 212 hergestellt. Diese Art der Aktivierung kann natürlich auch im Rahmen der anderen beispielhaft erläuterten Ausführungsformen (insbesondere Fig. 1 und 3 bis 5) Anwendung finden.

Auch in diesem Ausführungsbeispiel finden für den Heizprozess beispielsweise die in Ausführungsbeispiel 1 genannten Varianten Anwendung. Das Aufheizen der Aufgussflüssigkeit oder Brühflüssigkeit führt vorzugsweise auch hier zu einem Druckanstieg in der Dose, der in dieser beispielhaften Ausführungsform jedoch nicht über ein Überdruckventil abgelassen wird, sondern zusammen mit dem bereits bei der Herstellung in die Dose eingebrachten Druck dazu genutzt wird, die Aufgussflüssigkeit oder Brühflüssigkeit durch die darunter liegende Aufgussmassekammer oder Brühmassekammer 206 und damit durch die Aufgussmasse oder Brühmasse und ein Filtersystem 208 zu zwingen, bevor sie als fertiges Aufgussgetränk oder Brühgetränk die Dose verlässt. Optional kann auch in diesem Fall ein Überdruckventil vorgesehen sein, z. B. aus Sicherheitsgründen.

Die Aufgussflüssigkeitskammer oder Brühflüssigkeitskammer 216 ist von der Aufgussmassekammer oder Brühmassekammer 206 vorzugsweise über eine so genannte Berstscheibe 209 getrennt. Diese besitzt eine Sollbruchstelle und gibt beim Erreichen einer bestimmten Kombination aus Druck und Temperatur in der darüber liegenden Aufgussmassekammer oder Brühmassekammer vorzugsweise einen definierten Querschnitt frei, durch den die Aufgussflüssigkeit oder Brühflüssigkeit in die Aufguss- oder Brühmassekammer 206 strömen kann. Zu diesem Zweck ist die Aufguss- oder Brühmassekammer 206 vorzugsweise unterhalb der Kammer mit der Brühflüssigkeit angeordnet. Zwischen Aufgussmasse und dem Heizelement 215 befindet sich Brühflüssigkeit, was ein Überhitzen oder Verbrennen der Aufgussmasse verhindert. Dies kann ebenso bei den anderen Ausführungsformen der Erfindung der Fall sein.

Um die Aufgussmasse oder Brühmasse vor schädigenden Einflüssen durch die Luft zu schützen, welche die in der Aufgussmasse oder Brühmasse enthaltenen Aromastoffe bei langer Exposition oxidieren würden, kann das Filtersystem nach außen hin mit einer Abreißfolie 217 verschlossen und/oder mit einer wasserlöslichen, genussfähigen Substanz imprägniert sein, welche die Filterporen verschließt. Das Filtersystem wird damit erst bei Kontakt mit der Aufgussflüssigkeit oder Brühflüssigkeit für diese durchlässig.

Die vorliegende Ausführungsform der Erfindung kann als Beigabe eine Tasse aufweisen. Hierbei kann es sich um eine zum Verzehr geeignete Tasse 219 aus Keks, Waffeln oder dergleichen handeln, die zum Zweck der Dichtigkeit eine Beschichtung mit einer Glasur besitzen kann, die beispielsweise aus einem Disaccharid oder Polysaccharid zusammengesetzt sein kann.

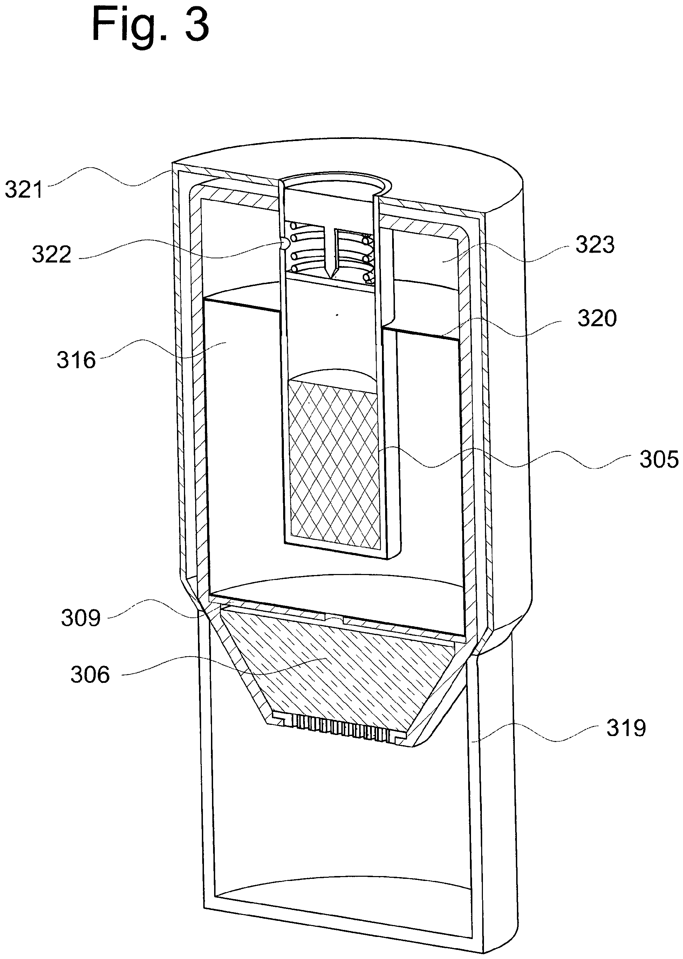

Da die Temperatur der Dosenaußenwand bei der Erhitzung der Aufgussflüssigkeit oder Brühflüssigkeit auf Temperaturen über 90°C steigen kann, besitzt die Dosenaußenwand vorzugsweise eine Hitzeisolierung, beispielsweise aus Pappe oder Kunststoffen (nicht abgebildet), welche die Nutzer vor Verbrennung schützt. Alternativ kann auch eine Doppelwand verwendet werden, siehe etwa nachfolgende Figur 3.

Für den Fachmann dürfte anhand der hiesigen Ausführungen verständlich sein, dass einige oder alle der strukturellen Merkmale der Vorrichtung von Fig. 2 auch unabhängig eines bei der Herstellung eingebrachten Überdrucks verwendet werden können.

Figur 3 zeigt eine Vorrichtung gemäß einer dritten beispielhaften Ausführungsform der Erfindung. Diese nutzt vorzugsweise den sich beim Brühvorgang in der Dose aufbauenden Überdruck, um die Aufgussflüssigkeit oder Brühflüssigkeit durch die Aufgussmasse oder Brühmasse und ein Filtersystem zu zwingen. Anders als bei Ausführungsform 2 ist die Dose jedoch vorzugsweise nicht bereits bei ihrem Herstellungsprozess mit einem zusätzlichen Überdruck beaufschlagt worden. Der Überdruck in der Dose entsteht hier vorzugsweise allein durch den Anstieg der Temperatur in der Dose, und durch die Freisetzung von Gasen bei den im Heizelement ablaufenden Reaktionen. Die strukturellen Merkmale der Ausführungsform kann jedoch auch dann Anwendung finden, wenn ein gewisser Überdruck bereits bei der Herstellung vorgesehen wird, z. B. aus Haltbarkeitsgründen.

Dem Heizelement 305 werden hier zusätzlich zu den eigentlichen Brennstoffen weitere Substanzen zugesetzt, die beim Erhitzen in gasförmige Produkte zerfallen oder mit dem Brennstoff des Heizelements zu gasförmigen Produkten reagieren. Diese Abgase werden vorzugsweise direkt in die Dose abgegeben.

Vorzugsweise wird das in der Dose expandierende und neu entstandene Gasvolumen in eine Kammer 323 geleitet, die vorzugsweise ein variables Volumen aufweist. Bei der beispielhaften Ausführungsform von Figur 3 ist zu diesem Zweck eine flexible Trennwand 320 vorgesehen, die die Kammer 323 von der Aufgussflüssigkeitskammer oder Brühflüssigkeitskammer 316 trennt. Die flexible Trennwand 320 kann dabei eine Wand der in der Dose enthaltenen Aufgussflüssigkeitskammer oder Brühflüssigkeitskammer 316 bilden. Das beim Heizprozess entstehende Gasvolumen wird vorzugsweise so geleitet, dass es auf die flexible Trennwand 320 drückt. Die flexible Trennwand 320 setzt dann vorzugsweise ihrerseits die Aufgussflüssigkeit oder Brühflüssigkeit in der Aufgussflüssigkeitskammer oder Brühflüssigkeitskammer 316 unter Druck. Die flexible Trennwand 320 kann die Aufgussflüssigkeitskammer oder Brühflüssigkeitskammer 316 abschnittsweise oder vollständig umgeben.

Im vorliegenden Ausführungsbeispiel kann es sich bei den Gas bildenden Substanzen im Heizelement um Natriumhydrogencarbonat oder Glucose oder einem Gemisch aus beiden Stoffen handeln, wobei die Substanzen sich im Rahmen empirischer Untersuchungen als besonders vorteilhaft erwiesen haben.

Gestartet wird im vorliegenden Fall die Wärmenergie und Gas liefernde Redoxreaktion zum Aufheizen der Aufgussflüssigkeit oder Brühflüssigkeit und Erzeugen des Brühdrucks indem wie bei Ausführungsbeispiel 1 ein Dorn eine Trennwand durchsticht und so das vor dem Start des Heizprozessen in Kammer 323 enthaltene sauerstoffhaltige Gasgemisch mit dem Brennstoff in Kontakt kommt.

Die Trennung zwischen der die Aufgussflüssigkeit oder Brühflüssigkeit enthaltenden Kammer und der den Filter und die Aufgussmasse oder Brühmasse enthaltenden Kammer erfolgt hier mittels einer Kombination aus Trennscheibe und Trennfolie 309, deren Funktionsweise oben erläutert wurde. Die Trennfolie ist in diesem Ausführungsbeispiel vorzugsweise Teil der Aufgussflüssigkeitskammer oder Brühflüssigkeitskammer und/oder in Kontakt mit Aufguss- oder Brühflüssigkeit vorgesehen. Bei Erreichen eines bestimmten Drucks reißt die Trennfolie und gibt die Verbindung zwischen Aufgussflüssigkeit oder Brühflüssigkeit und Aufgussmasse oder Brühmasse frei, vorzugsweise sodass die Aufguss- oder Brühflüssigkeit durch die Trennscheibe strömen kann. Die Aufgussflüssigkeitskammer oder Brühflüssigkeitskammer wird durch den dadurch entstehenden Druckabfall zusammengedrückt und verschließt nach dem vollständigen Herausdrücken der Aufgussflüssigkeit oder Brühflüssigkeit die Trennscheibe von oben, so dass kein Gas die Dose durch den Filter verlassen kann.

Statt einer Trennscheibe und Trennfolie 309 können auch eine Berstscheibe (vgl. Figur 2) oder ein Ventil eingesetzt werden. Statt einer Trennscheibe können zudem auch andere strukturelle Elemente, die die Trennfolie ausreichend stützen, verwendet werden, wie etwa eine Gitterstruktur. Eine Trennfolie weist vorzugsweise ein Dicke von maximal 0,005 mm, maximal 0,1 mm, oder maximal 0,04 mm auf. Eine Trennscheibe weist vorzugsweise ein Dicke von minimal 0,5 mm, minimal 1 mm oder minimal 2 mm auf. Die Trennfolie kann den Boden der Aufgussflüssigkeitskammer oder Brühflüssigkeitskammer bilden. Sie kann gegenüber der flexiblen Wand 320 vorgesehen sein. Eine solche Trennwand und/oder Trennfolie kann auch im Rahmen der anderen Ausführungsformen vorgesehen sein.

Die Dose schließt an der Unterseite vorzugsweise mit einer Tasse 319 ab. Diese kann so gestaltet sein, dass die Exposition der Aufgussmasse oder Brühmasse an der Luft unterbunden und auf diese Weise die Oxidation der Aromastoffe darin verhindert. Eine solche Tasse kann auch im Rahmen der anderen Ausführungsformen vorgesehen sein.

Die Tasse wird dafür vorzugsweise durch einen Unterdruck, beispielsweise einen Unterdruck in der Kammer mit der Aufgussmasse oder Brühmasse und/oder dem Filtersystem und/oder in der Tasse, an der Dose angesaugt. Dieser Unterdruck wird vorzugsweise dadurch aufgehoben, dass die unter Druck stehende, heiße Aufgussflüssigkeit oder Brühflüssigkeit die Trennfolie zwischen der Aufgussflüssigkeitskammer oder Brühflüssigkeitskammer und der Kammer mit der Aufgussmasse oder Brühmasse durchtrennt. Auf diese Weise ist gewährleistet, dass sich die Tasse stets zum richtigen Zeitpunkt von der restlichen Vorrichtung löst.

Die Tasse selbst ist vorzugsweise aus einem formstabilen und/oder unterdruckstabilen Material hergestellt oder besteht daraus, z.B. einem Leichtmetall wie etwa Aluminium, Stahlblech oder einem entsprechenden Kunststoff, um der Unterdruckmontage standzuhalten. Um den Nutzer der Erfindung beim Festhalten der Einheit gegen Verbrennungen zu schützen und zum Zweck eines längeren Beibehaltens der hohen Temperatur des Aufgussgetränks oder Brühgetränks, sind sowohl Dose als auch Tasse bei der vorliegenden Ausführungsform mit einer Wärme isolierenden Doppelwand 321 versehen, wie sie bei Thermoskannen üblich ist (Nur für die Dose abgebildet).

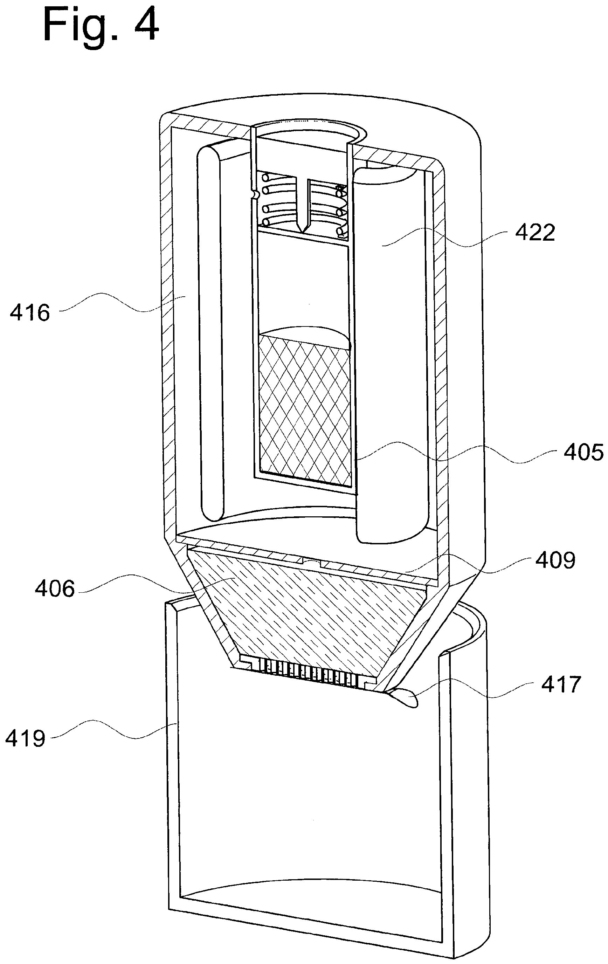

Figur 4 zeigt eine Vorrichtung gemäß einer vierten beispielhaften Ausführungsform. Diese unterscheidet sich von der Ausführungsform nach Figur 3 im Wesentlichen dadurch, dass die Trennung zwischen Aufgussflüssigkeit oder Brühflüssigkeit und Verbrennungsgasen nicht durch eine flexible Trennwand erfolgt, die beispielsweise einen Abschnitt der Flüssigkeitskammer bilden kann, sondern durch eine flexible Kammer 422, welche die Verbrennungsgase aufnimmt. Die flexible Kammer 422 kann zumindest teilweise oder vollständig innerhalb der Kammer, die die Aufgussflüssigkeit oder Brühflüssigkeit enthält, vorgesehen sein. Die Außenwände der Kammer, die die Aufgussflüssigkeit oder Brühflüssigkeit enthält, können die flexible Kammer 422 daher zumindest teilweise umgeben. Die Kammer für die Aufgussflüssigkeit oder Brühflüssigkeit wird somit vorzugsweise von den Dosenaußenwänden begrenzt (vorzugsweise vollständig), wie auch in den Ausführungsbeispielen nach Figuren 1 und 2.

Die Vorrichtung verfügt vorzugsweise ebenfalls über ein Heizelement 405, das im Wesentlichen demjenigen des Ausführungsbeispiels nach Figur 3 entsprechen kann. Die flexible Kammer 422, die beispielsweise als ein flexibler Schlauch ausgebildet sein kann, steht mit dem Heizelement 405 in Fluidverbindung, sodass sie während des Heizprozesses die Verbrennungsgase aufnehmen kann. Die Kammer 422, insbesondere der Schlauch, ist vorzugsweise vor Beginn des Heizprozesses zusammengefaltet und/oder zusammengerollt vorgesehen und/oder kann am Heizelement anliegen. Die flexible Kammer ist vorzugsweise so ausgebildet, dass sie abschnittsweise oder vollständig Wände aus einem relativ dehnungssteifen Material (etwa einem Metall oder einer Metalllegierung) hat und ihr Volumen bei Aufnahme der Verbrennungsgase daher durch Entfalten und/oder Entrollen erhöht. Alternativ kann die Kammer aber auch abschnittsweise oder vollständig durch dehnbare Wände begrenzt sein. In diesem Fall können sich die Wände bei Aufnahme der Gase dehnen, sodass die Kammer aufgeblasen wird. Alternativ oder zusätzlich kann auch die Hülse des Heizelements 405 selbst die flexible Kammer bilden (etwa zusammengerollt und/oder zusammengefaltet vorgesehen sein und/oder dehnbare Wände haben) und sich aufgrund der entstehenden Gase ausdehnen.

Der Heizprozess wird auch hier durch Betätigen eines Startmechanismus (z. B. eines Druckknopfes, eines Drehknopfes und/oder eines Zugknopfes), der beispielsweise am Deckel der Dose vorgesehen sein kann, gestartet. Durch den damit hergestellten Kontakt von sauerstoffhaltigem Gasgemisch mit dem Brennstoff wird die exotherme Reaktion gestartet. Das sauerstoffhaltige Gasgemisch befindet sich in diesem Ausführungsbeispiel oberhalb der Trennwand im Heizelement, die beim Betätigen des Startmechanismus fluiddurchlässig wird. Auch hier kann ein Schutz des Auslöseknopfs gegen eine unbeabsichtigte Betätigung vorgesehen sein, etwa durch das Anbringen einer Schutzkappe.

Wie bei dem Ausführungsbeispiel von Figur 3, so ist der zweite, Energie liefernde Prozess auch hier vorzugsweise derart gestaltet, dass während seines Verlaufs eine bedeutende Menge an Gasen entsteht. Neben den im Ausführungsbeispiel von Figur 3 bereits genannten Stoffen, die zur Freisetzung von Gasen führen, kann optional zusätzlich Kohlenstoff dem Stoffgemisch für den zweiten Prozess zugesetzt werden. Genau wie die Glucose erfüllt der Kohlenstoff dabei eine doppelte Aufgabe: Er verbrennt unter den gegebenen Bedingungen praktisch vollständig unter Bildung von CO₂ und ist gleichzeitig ein zusätzliches Reduktionsmittel, mit dem die im Stoffgemisch und/oder im sauerstoffhaltigen Gasgemisch vorhandenen Oxidationsmittel viel Wärmeenergie liefernde Redoxreaktionen eingehen. Auch beim Ausführungsbeispiel von Figur 3 kann Kohlenstoff vorgesehen sein.

Durch die Gasentwicklung entfaltet sich die Kammer 422, bei der dargestellten Ausführungsform insbesondere der flexible, zusammengefaltete, am Heizelement anliegende Metallschlauch. Dabei beansprucht er mehr und mehr Volumen im Doseninnenraum, wodurch die dort befindliche Aufgussflüssigkeit oder Brühflüssigkeit zunehmend unter Druck gesetzt wird.

Die Kammern für die Aufgussflüssigkeit oder Brühflüssigkeit und für die Aufgussmasse oder Brühmasse können auch hier durch eine Trennscheibe mit Trennfolie 409 voneinander getrennt sein, wie dies bereits in Ausführungsbeispiel 3 beschrieben wurde. Alternativ oder zusätzlich zur Trennscheibe und Trennfolie kann ein Ventil, das sich ab einer bestimmten Kombination von Druck und Temperatur der Aufgussflüssigkeit oder Brühflüssigkeit öffnet, vorgesehen sein. Alternativ oder zusätzlich kann auch eine Berstscheibe verwendet werden.

Zum Zweck des Schutzes der Aufgussmasse oder Brühmasse vor den schädigenden Einflüssen der Luft, welche zur allmählichen Zerstörung der Aromastoffe darin führen würden, schließt die Vorrichtung an ihrem unteren Ende optional, wie in Ausführungsbeispiel 1 bereits beschrieben, mit einer Abreißfolie 417 ab und/oder ist mit einer wasserlöslichen, genussfähigen Substanz imprägniert, welche die Filterporen verschließt. Das Filtersystem wird damit erst bei Kontakt mit der Aufgussflüssigkeit oder Brühflüssigkeit für diese durchlässig.

Eine Unterform der vorliegenden Ausführungsform verwendet als Alternative oder zusätzlich zur Abreißfolie und/oder der wasserlöslichen Imprägnierung auch hier ein Ventil, das sich öffnet, wenn das unter Druck stehende Aufgussgetränk oder Brühgetränk am Ventil anliegt.

Der erfinderischen Anordnung liegt auch hier optional eine Tasse 419 zum Verzehr des fertigen Aufgussgetränks oder Brühgetränks bei, die im vorliegenden Fall aus jedem für eine Tasse geeigneten Material gestaltet sein kann, beginnend bei Pappe und Leichtmetallen bis hin zu verzehrbaren Stoffen, wie etwa Kekssorten oder Waffelsorten. Zum Zweck eines Schutzes der Nutzer vor Verbrennungen ist die erfinderische Anordnung auch hier mit einer Wärme isolierenden Ummantelung (z. B. aus Pappe oder Kunststoffen) oder einer Doppelwand versehen und/oder zumindest abschnittsweise oder vollständig damit umgeben.

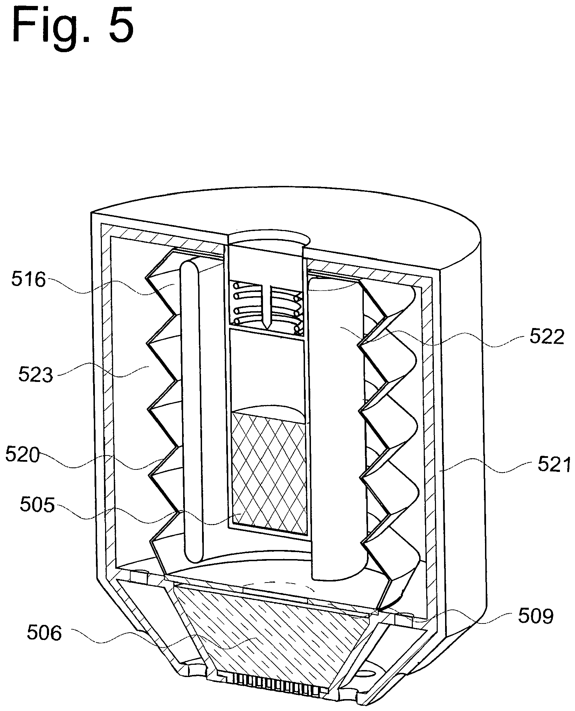

Figur 5 zeigt eine Vorrichtung gemäß einer vierten beispielhaften Ausführungsform. Dieses Ausführungsbeispiel unterscheidet sich von den obigen im Wesentlichen dadurch, dass es in der Dose über ein Mehrkammersystem für mehrere Flüssigkeiten verfügt, wobei eine erste Kammer 516 die Aufgussflüssigkeit oder Brühflüssigkeit und eine zweite Kammer 523 Milch enthält. Die Wände 520 der Aufgussflüssigkeitskammer oder Brühflüssigkeitskammer sind vorzugsweise flexibel gestaltet.

Die erste Kammer 516 ist vorzugsweise zwischen dem Heizelement 505 und der zweiten Kammer 523 vorgesehen. Die erste Kammer 516 grenzt vorzugsweise direkt an das Heizelement 505 an, das wie beim Ausführungsbeispiel von Figur 4 eine Hülse (z. B. eine Metallhülse) und eine flexible Kammer 522 (z. B. einen flexiblen Metallschlauch) aufweist oder hieraus besteht. Vorzugsweise expandiert die Hülse und/oder die flexible Kammer während des Heizprozesses, bei dem Wärmeenergie freigesetzt und Gase gebildet werden, und setzt auf diese Weise die Aufgussflüssigkeit oder Brühflüssigkeit unter Druck. Dieser Druck wird durch die flexible Wand der Aufgussflüssigkeitskammer oder Brühflüssigkeitskammer auch an die Kammer mit der Milch weitergegeben, welche vorzugsweise nicht direkt an das Heizelement angrenzt, sondern in der äußersten Sphäre innerhalb der Dose angesiedelt ist. Auf diese Weise wird verhindert, dass die hohe Temperatur des Heizelements die Milch anbrennen lässt.

Gestartet wird der Heizprozess beim vorliegenden Ausführungsbeispiel über einen Startmechanismus (beispielsweise einen Druckknopf und/oder einen Drehknopf und/oder einen Zugmechanismus), der entsprechend der Darstellung beispielsweise am Deckel der Dose vorgesehen sein kann. Durch Betätigen der Startmechanik wird eine Fluidverbindung zwischen dem sauerstoffhaltigem Gasgemisch und dem Brennstoff im Heizelement geschaffen, so dass die exotherme Reaktion beginnt. Das sauerstoffhaltige Gasgemisch befindet sich in diesem Ausführungsbeispiel über der Trennwand im Heizelement, die durch das Betätigen der Startmechanik fluiddurchlässig wird.

Der für den Prozess erforderliche Druck der Aufgussflüssigkeit oder Brühflüssigkeit und der Milch kann ausschließlich durch den Temperaturanstieg beim Aufheizvorgang und die beim Heizprozess entstehenden Gase verursacht werden. Als Gas entwickelnde Substanzen können hier ebenfalls Hydrogencarbonate und verschiedene Saccharide verwendet werden.

Die Abtrennung zwischen der Aufgussflüssigkeitskammer oder Brühflüssigkeitskammer von der Kammer mit der Aufgussmasse oder Brühmasse wird auch im vorliegenden Ausführungsbeispiel mit Hilfe eines Ventils realisiert, das bei einer bestimmten Kombination von Druck und Temperatur öffnet. Alternativ können die anderen beschriebenen Mechanismen verwendet werden. Der Luftabschluss der Aufgussmasse oder Brühmasse kann wahlweise mit jeder der in den anderen Ausführungsbeispielen bereits beschriebenen Variante erfolgen. Gleiches gilt für das Material, aus dem die beigefügte Tasse gestaltet ist.

Die Hitzeisolierung der Dose nach außen erfolgt auch beim vorliegenden Ausführungsbeispiel durch das Anbringen einer Isolation, z. B. eine Ummantelung 521 (z. B. aus Pappe oder Kunststoff). Alternativ kann auch eine Doppelwand vorgesehen sein.

Bei den Ausführungsformen, bei denen das Heizelement Gas oder Gase entwickelt, führen diese vorzugsweise in der Kammer mit Aufgussflüssigkeit oder Brühflüssigkeit zu einem Druck von mindestens 5 bar, mindestens 7 bar, mindestens 10 bar, mindestens 12 oder mindestens 15 bar.

## Patentansprüche

1. Vorrichtung zur genussfertigen Bereitstellung eines heißen Aufgussgetränks oder Brühgetränks, welche alle zur genussfertigen Bereitstellung des heißen Getränks erforderlichen Komponenten enthält, **dadurch gekennzeichnet, dass** die zum Erhitzen des Getränks erforderliche Wärmeenergie durch einen ein- oder mehrstufigen Prozess geliefert wird, dessen erste Stufe eine exotherme Redoxreaktion zwischen dem in der Vorrichtung enthaltenen sauerstoffhaltigen Gasgemisch und mindestens einem Feststoff umfasst.

2. Vorrichtung nach Anspruch 1, wobei die Vorrichtung mindestens ein Heizelement (105,205, 305, 405, 505) und mindestens zwei Lebensmittelkammern (106, 206, 306, 406, 506, 116, 216, 316, 416, 516) umfasst.

3. Vorrichtung nach einem oder mehreren der vorhergehenden Ansprüche, wobei eine Trennvorrichtung (109, 209, 309, 409, 509) zwischen den Lebensmittelkammern vorgesehen ist, die so gestaltet und/oder ausgebildet ist, dass sie bei einer Änderung des Drucks und/oder der Temperatur in der Vorrichtung permeabel wird und dadurch die Trennung zwischen den Inhalten von mindestens zwei der Lebensmittelkammern aufgehoben wird.

4. Vorrichtung nach einem oder mehreren der vorhergehenden Ansprüche, wobei es sich bei dem ersten Teilprozess um eine exotherme chemische Reaktion zwischen dem in der Vorrichtung enthaltenen Sauerstoff, Eisenpulver, Aktivkohle und einer Natriumchloridlösung handelt.

5. Vorrichtung nach einem oder mehreren der vorhergehenden Ansprüche, wobei mindestens eine Lebensmittelkammer (116, 216, 316, 416, 516) eine Aufgussflüssigkeit oder Brühflüssigkeit und mindestens eine andere Lebensmittelkammer (106, 206, 306, 406, 506) eine feste Aufgussmasse oder Brühmasse enthält, wobei die Aufgussflüssigkeit oder Brühflüssigkeit erhitzt wird, bevor sie mit der festen Aufgussmasse oder Brühmasse in Kontakt tritt.

6. Vorrichtung nach einem oder mehreren der vorhergehenden Ansprüche, wobei sich vor dem Starten des ersten Teilprozesses das sauerstoffhaltige Gasgemisch in einer Lebensmittelkammer (116, 216, 316, 416, 516) oder in einer eigenen Kammer befindet.

7. Vorrichtung nach einem oder mehreren der vorhergehenden Ansprüche, wobei der erste Teilprozess durch mechanische Einwirkung an einer definierten Stelle an der Außenwand der Vorrichtung gestartet wird, wobei durch die mechanische Einwirkung an der Außenwand der Vorrichtung eine Fluidverbindung zwischen der das sauerstoffhaltige Gasgemisch enthaltenden Kammer und dem Innenraum des Heizelements (105, 205, 305, 405, 505) geöffnet wird.

8. Vorrichtung nach einem oder mehreren der vorhergehenden Ansprüche, wobei die das sauerstoffhaltige Gasgemisch enthaltende Kammer (116, 216, 316, 416, 516) der Dose bereits vor dem Start des ersten Teilprozesses mit einem Überdruck an sauerstoffhaltigem Gasgemisch beaufschlagt wurde.

9. Vorrichtung nach einem oder mehreren der vorhergehenden Ansprüche, wobei das Heizelement (105, 205, 305, 405, 505) eine Hülse oder einen Beutel oder eine Kombination daraus umfasst, in der alle für den Heizvorgang relevanten Komponenten enthalten sind.

10. Vorrichtung nach einem oder mehreren der vorhergehenden Ansprüche, wobei das Heizelement (105, 205, 305, 405, 505) eine flexible Komponente (422, 522) umfasst, die beim Aufheizvorgang räumlich expandiert und dadurch neben dem Aufheizen der Aufgussflüssigkeit oder Brühflüssigkeit zusätzlich die Erhöhung des Drucks im Inneren der erfindungsgemäßen Vorrichtung bewirkt.

11. Vorrichtung nach einem oder mehreren der vorhergehenden Ansprüche, wobei das Stoffgemisch eines zweiten Teilprozesses des Heizprozesses aus mindestens zwei Feststoffen besteht, wobei es sich bei diesen zwei Feststoffen um ein erstes Metall oder ein erstes Halbmetall im elementaren Zustand und um eine erste Verbindung eines zweiten Metalls oder eines zweiten Halbmetalls mit einem Nichtmetall der vierten, fünften, sechsten oder siebenten Hauptgruppe des Periodensystems der Elemente handelt.

12. Vorrichtung nach einem oder mehreren der vorhergehenden Ansprüche, wobei das Heizelement vor der Aktivierung nicht mehr als 25 % bevorzugt aber nicht mehr als 15 % und besonders bevorzugt nicht mehr als 5 % des Volumens der gesamten Vorrichtung einnimmt.

13. Vorrichtung nach einem oder mehreren der vorhergehenden Ansprüche, **dadurch gekennzeichnet, dass** ein Trinkgefäß (219, 319, 419) lösbar an der Vorrichtung angeordnet ist, bevorzugt an einer Unterseite der genannten Vorrichtung.

14. Vorrichtung gemäß Anspruch 13, **dadurch gekennzeichnet, dass** das Trinkgefäß (219, 319, 419) für eine gute Wärmeisolierung aus Pappe oder Kunststoff besteht und/oder mit Pappe oder Kunststoff ummantelt ist, und/oder doppelwandig ausgeführt ist.

15. Verfahren zur genussfertigen Bereitstellung eines heißen Aufgussgetränks oder Brühgetränks, das sich einer Vorrichtung nach einem der Ansprüche 1 bis 14 bedient.

## Claims

1. Device for providing a hot infusion beverage or brewed beverage ready for consumption, which contains all the components required for providing the hot beverage ready for consumption, **characterized in that** the thermal energy required for heating the beverage is provided by a single-stage or multi-stage process, the first stage of which comprises an exothermic redox reaction between the oxygen-containing gas mixture contained in the device and at least one solid.

2. Device according to claim 1, wherein the device comprises at least one heating element (105, 205, 305, 405, 505) and at least two food chambers (106, 206, 306, 406, 506, 116, 216, 316, 416, 516).

3. Device according to one or more of the preceding claims, wherein a separating device (109, 209, 309, 409, 509) is provided between the food chambers, said separating device (109, 209, 309, 409, 509) being designed and/or adapted to become permeable upon a change of pressure and/or temperature in the device, thereby cancelling the separation between the contents of at least two of the food chambers.

4. Device according to one or more of the preceding claims, wherein the first sub-process is an exothermic chemical reaction between the oxygen contained in the device, iron powder, activated carbon and a sodium chloride solution.

5. Device according to one or more of the preceding claims, wherein at least one food chamber (116, 216, 316, 416, 516) contains an infusion liquid or brewing liquid and at least one other food chamber (106, 206, 306, 406, 506) contains a solid infusion mass or brewing mass, wherein the infusion liquid or brewing liquid is heated before it comes into contact with the solid infusion mass or brewing mass.

6. Device according to one or more of the preceding claims, wherein prior to starting the first sub-process, the oxygen-containing gas mixture is in a food chamber (116, 216, 316, 416, 516) or in a separate chamber.

7. Device according to one or more of the preceding claims, wherein the first sub-process is started by mechanical action at a defined location on the outer wall of the device, wherein the mechanical action on the outer wall of the device opens a fluid communication between the chamber containing the oxygen-containing gas mixture and the interior of the heating element (105, 205, 305, 405, 505).

8. Device according to one or more of the preceding claims, wherein the chamber (116, 216, 316, 416, 516) of the can containing the oxygen-containing gas mixture has already been subjected to an overpressure of the oxygen-containing gas mixture prior to the start of the first sub-process.

9. Device according to one or more of the foregoing claims, wherein the heating element (105, 205, 305, 405, 505) comprises a sleeve or bag, or a combination thereof, in which all components relevant to the heating operation are contained.

10. Device according to one or more of the preceding claims, wherein the heating element (105, 205, 305, 405, 505) comprises a flexible component (422, 522) which expands spatially during the heating process and thereby, in addition to heating the infusion liquid or brewing liquid, additionally causes the pressure inside the device according to the invention to be increased.

11. Device according to one or more of the preceding claims, wherein the mixture of substances of a second sub-process of the heating process consists of at least two solids, these two solids being a first metal or a first semi-metal in the elemental state and a first compound of a second metal or a second semi-metal with a non-metal of the fourth, fifth, sixth or seventh main group of the periodic table of elements.

12. Device according to one or more of the preceding claims, wherein the heating element, prior to activation, occupies not more than 25% preferably but not more than 15% and particularly preferably not more than 5% of the volume of the total device.

13. Device according to one or more of the preceding claims, **characterized in that** a drinking vessel (219, 319, 419) is detachably arranged on the device, preferably on an underside of said device.

14. Device according to claim 13, **characterized in that** the drinking vessel (219, 319, 419) for good thermal insulation consists of cardboard or plastic and/or is covered with cardboard or plastic and/or is double-walled.

15. Process for providing a hot infusion beverage or brewed beverage ready for consumption, using a device according to any of claims 1 to 14.

## Revendications

1. Dispositif pour la préparation d'une boisson chaude à infusion ou d'une boisson infusée, qui contient tous les composants nécessaires à la préparation de la boisson chaude, **caractérisé en ce que** l'énergie thermique nécessaire au chauffage de la boisson est fournie par un procédé en une ou plusieurs étapes, dont la première étape comprend une réaction redox exothermique entre le mélange gazeux contenant de l'oxygène et au moins un solide contenu dans le dispositif.

2. Dispositif selon la revendication 1, dans lequel le dispositif comprend au moins un élément chauffant (105, 205, 305, 405, 505, 505) et au moins deux chambres alimentaires (106, 206, 306, 406, 506, 506, 116, 216, 316, 416, 516).

3. Dispositif selon une ou plusieurs des revendications précédentes, dans lequel un dispositif de séparation (109, 209, 309, 409, 409, 509, 509) est prévu entre les chambres alimentaires, ledit dispositif de séparation (109, 209, 309, 409, 509) étant configuré et/ou adapté pour devenir perméable lors d'un changement de pression et/ou température dans le dispositif, annulant ainsi la séparation du contenu d'au moins deux des chambres alimentaires.

4. Dispositif selon une ou plusieurs des revendications précédentes, dans lequel le premier sous-processus est une réaction chimique exothermique entre l'oxygène, la poudre de fer, le charbon actif et une solution de chlorure de sodium contenue dans le dispositif.

5. Appareil selon une ou plusieurs des revendications précédentes, dans lequel au moins une chambre alimentaire (116, 216, 316, 416, 516) contient un liquide de perfusion ou un liquide de brassage et au moins une autre chambre alimentaire (106, 206, 306, 406, 506, 506) contient une masse solide de perfusion ou de brassage, le liquide de perfusion ou le liquide de brassage étant chauffé avant son entrée en contact avec la masse solide de perfusion ou de brassage.

6. Appareil selon une ou plusieurs des revendications précédentes, dans lequel, avant de commencer le premier sous-processus, le mélange gazeux contenant de l'oxygène se trouve dans une chambre alimentaire (116, 216, 316, 416, 516) ou dans une chambre séparée.

7. Dispositif selon une ou plusieurs des revendications précédentes, dans lequel le premier processus partiel est démarré par une action mécanique à un emplacement défini sur la paroi extérieure du dispositif, dans lequel une liaison fluidique entre la chambre contenant le mélange gazeux contenant l'oxygène et l'intérieur de l'élément chauffant (105, 205, 305, 405, 505, 505) est ouverte par l'action mécanique sur la paroi extérieure du dispositif.

8. Appareil selon une ou plusieurs des revendications précédentes, dans lequel la chambre (116, 216, 316, 416, 516) de la canette contenant le mélange gazeux contenant de l'oxygène a été soumise à une surpression du mélange gazeux contenant de l'oxygène avant le début du premier sous-processus.

9. Appareil selon une ou plusieurs des revendications précédentes, dans lequel l'élément chauffant (105, 205, 305, 405, 505, 505) comprend un manchon ou un sac, ou une combinaison de ceux-ci, dans lequel tous les composants pertinents pour le fonctionnement de chauffage sont contenus.

10. Dispositif selon une ou plusieurs des revendications précédentes, dans lequel l'élément chauffant (105, 205, 305, 405, 405, 505) comprend un composant flexible (422, 522) qui se dilate dans l'espace pendant le processus de chauffage et provoque ainsi, en plus du chauffage du liquide de perfusion ou du liquide de chauffage, une augmentation supplémentaire de la pression dans le dispositif selon l'invention.

11. Dispositif selon une ou plusieurs des revendications précédentes, le mélange de substances d'un second procédé partiel du procédé de chauffage consistant en au moins deux solides, ces deux solides étant un premier métal ou un premier semi-métal à l'état élémentaire et un premier composé d'un second métal ou un second semi-métal avec un non-métàl du quatrième, cinquième, sixième ou septième groupe principal du tableau périodique des éléments.

12. Dispositif selon une ou plusieurs des revendications précédentes, dans lequel l'élément chauffant avant l'activation n'occupe pas plus de 25% mais de préférence pas plus de 15% et surtout de préférence pas plus de 5% du volume du dispositif entier.

13. Dispositif selon une ou plusieurs des revendications précédentes, **caractérisé en ce qu'**un récipient de boisson (219, 319, 419) est disposé dé manière amovible sur le dispositif, de préférence sur une face inférieure dudit dispositif.

14. Dispositif selon la revendication 13, **caractérisé en ce que** le récipient à boisson (219, 319, 419) pour une bonne isolation thermique est en carton ou en matière plastique et/ou est recouvert de carton ou de matière plastique et/ou est à double paroi.

15. Procédé pour la préparation prête à consommer d'une boisson chaude à infusion ou d'une boisson infusée, à l'aide d'un dispositif selon l'une quelconque des revendications 1 à 14.
